# EUROPEAN PATENT APPLICATION

(11) **EP 4 593 357 A1**
(43) Date of publication of application: **30.07.2025**
(21) Application number: 25154210.6
(22) Date of filing: 27.01.2025
(51) Int. Cl.: H04L 67/55, G06N 20/00, G06Q 10/00

(54) **SINGLE PANE OF GLASS MOBILE APPLICATION INCLUDING ERP AGNOSTIC REALTIME DATA MESH WITH CHANGE DATA CAPTURE**

(30) Priority: 26.01.2024 US 202418424193
(71) Applicant: Ingram Micro Inc., Irvine, CA 92612 (US)
(72) Inventor: Sahoo, Sanjib, Naperville, IL, 60564 (US)
(74) Representative: Altmann Stößel Dick Patentanwälte PartG mbB

(57) **Abstract**

System and methods are provided for real-time data integration, analysis, and notification within a Mobile App system. Embodiments include initializing a data layer and preprocessing phase, leveraging distributed database strategies to store structured and unstructured data. The Real-Time Data Mesh (RTDM) continuously draws data from various platforms, employing signal processing methods and machine learning techniques for noise removal and data feature extraction. The Advanced Analytics and Machine Learning (AAML) engine processes data, while decision constructs derive suitable actions. The Push Notification Service activates based on an Event-Driven Architecture (EDA) or a Publish-Subscribe (Pub-Sub) system, delivering customized notifications. Technical precision ensures timely and pertinent information reaches end-users. The system optimizes operations through adaptive feedback mechanisms and secures data through encryption.

## Description

### CROSS REFERENCE TO RELATED APPLICATIONS

This application is a Continuation-In-Part (CIP) of U.S. patent application Ser. No. 18/341,714, filed on June 26, 2023; U.S. patent application Ser. No. 18/349,836, filed on July 10, 2023; U.S. provisional application No. 63/513,073, filed on July 11, 2023; U.S. provisional application No. 63/513,078, filed on July 11, 2023; U.S. provisional application No. 63/515,075, filed on July 21, 2023; and U.S. provisional application No. 63/515,076, filed on July 21, 2023. Each of these applications is incorporated herein by reference in its entirety.

### BACKGROUND

This invention relates to the aspects of a real-time data mesh method and system that encompass distribution, supply chain management, and related functionalities.

The traditional global distribution industry faces a multitude of challenges that encompass distribution management, supply chain management, inventory control, SKU management, compliance, and evolving consumer expectations. Traditionally, distribution and supply chain management, not being core competencies for many distributors, have been fraught with inefficiencies. Inventory control has long been a significant concern, with market fluctuations demanding flexible distribution and supply chain models. SKU management and localization have added layers of complexity due to divergent data from various OEMs and the requirements of differing jurisdictions. Compliance with international regulations has also demanded additional vigilance and paperwork. Finally, traditional customer interaction methods are quickly becoming outdated with the shift towards ecosystem commerce.

Enterprise Resource Planning (ERP) systems have served as the mainstay in managing business processes, including distribution and supply chain. These systems act as central repositories where different departments such as finance, human resources, and inventory management can access and share real-time data. While ERPs are comprehensive, they present several challenges in today's complex distribution and supply chain environment. One of the primary challenges is data fragmentation. Data silos across different departments or even separate ERP systems make real-time visibility difficult to achieve. Users lack a comprehensive view of key distribution and supply chain metrics, which adversely affects decision-making processes.

Moreover, ERP systems often do not offer effective data integration capabilities. Traditional ERP systems are not designed to integrate efficiently with external systems or even between different modules within the same ERP suite. This design results in a cumbersome and error-prone manual process to transfer data between systems and affects the flow of information throughout the supply chain. Data inconsistencies occur when information exists in different formats across systems, hindering accurate data analysis and leading to uninformed decision-making.

Data inconsistency presents another challenge. When data exists in different formats or units across departments or ERPs, standardizing this data for meaningful analysis becomes a painstaking process. Businesses often resort to time-consuming manual processes for data transformation and validation, which further delays decision-making. Additionally, traditional ERP systems often lack the capabilities to handle large volumes of data effectively. These systems struggle to provide timely insights for operational improvements, particularly problematic for businesses dealing with complex and expansive distribution and supply chain networks.

Data security is another concern, especially considering the sensitive nature of supply chain data, which includes customer details, pricing, and contracts. Ensuring compliance with global regulations on data security and governance adds an additional layer of complexity. Traditional ERP systems often lack robust security features agile enough to adapt to the continually evolving landscape of cybersecurity threats and compliance requirements.

Lastly, the consumer expectation for faster service and real-time information adds further pressure on traditional systems. Conventional request-based user interfaces in distribution platforms are challenged by delayed access to critical distribution and supply chain metrics. These request-based systems may suffer from data staleness since data is only updated when requested, resulting in outdated information that hinders informed decision-making. Moreover, requesting data from multiple sources in conventional systems requires substantial resources and can be time-consuming, making them resource-intensive. They are reactive in nature, relying on user-initiated requests for data, which limits proactivity. Integrating data from various sources in these systems can be complex and cumbersome, leading to complex integration challenges. Additionally, request-based systems may face scalability challenges when dealing with a large volume of data requests. Thus, conventional request-based distribution and supply chain platforms often hinder efficient distribution and distribution management.

### BRIEF SUMMARY OF THE INVENTION

The global distribution industry is at a critical juncture, grappling with an array of challenges that span across multiple domains. These obstacles, which are both historical and emergent, necessitate the crafting of innovative and effective solutions to steer the sector towards growth and efficiency. Among these numerous hurdles, the most significant ones reside within the realms of distribution management, supply chain management, inventory and compliance issues, SKU (Stock Keeping Unit) management, the shift to direct-to-consumer models, and the rapidly evolving consumer expectations and behavior.

The first key challenge pertains to the management of the distribution process, a central part of the operations for any distributor. Yet, paradoxically, it's not typically within a distributor's core competencies. This gap creates inefficiencies in the system and compounds the difficulties in managing disruptions, which, in turn, has a direct bearing on a distributor's capacity to deliver products and services efficiently and on time. To add to these challenges, market trends are skewing towards a more direct-to-consumer model. The traditional distribution methodologies, which involved numerous intermediaries, are being gradually displaced. This evolving market dynamic necessitates a significant reassessment and reorientation of existing business models and strategies to ensure alignment with this new market reality.

A quintessential problem in the realm of distribution is inventory management. Considering the mercurial nature of market demands and trends, companies must ensure they maintain a flexible distribution and supply chain without necessarily holding positions in inventory. This makes the task of promising and delivering goods to customers substantially more complex and challenging. Besides, the sheer necessity of navigating through a myriad of compliance regulations for transporting goods and services across international borders adds an additional layer of complexity to the distribution process. This not only makes the distribution process more intricate and challenging but also imposes an extra layer of vigilance and paperwork to remain compliant.

To compound these challenges further, the issues surrounding the localization of products, varying distribution rights, and managing global SKUs also need to be addressed. The process of reconciling data from different Original Equipment Manufacturers (OEMs), each with its unique systems and processes, adds to the complexity. Furthermore, addressing the requirements of localization that are in line with laws and regulations of different jurisdictions adds to the inefficiencies and the potential for errors.

Finally, processes should be made more efficient and streamlined to ensure the sustainability of the distribution model in the evolving market landscape. This involves shifting the focus of the distribution platform from supply chain management to encompass subscription management, customer visibility, and other key distribution-oriented functionalities. The landscape of consumer behavior and expectations is rapidly changing. The shift towards ecosystem commerce necessitates the creation of a user-friendly, efficient, and configurable platform for purchasing technology. Traditional methods of customer interaction are quickly losing favor, making it indispensable for companies to evolve and cater to these new customer expectations.

Despite these challenges, the distribution model holds numerous advantages over the direct-to-consumer model. Firstly, it enables manufacturers to focus on their core competencies, leaving the complexities of logistics and distribution to specialized entities. Secondly, distribution networks often have extensive reach, allowing products to be available to customers in far-flung areas that may not be feasible for manufacturers to cover directly. Thirdly, distributors often offer value-added services such as after-sales support, installation, and training that enhance the overall customer experience.

However, for these benefits to materialize and for the distribution model to remain relevant and effective, it is imperative that it evolves and adapts to the emerging challenges. Processes should be made more efficient and streamlined to ensure the sustainability of the distribution model in the evolving market landscape. Systems and methodologies described herein are directed to addressing these challenges. Moreover, systems described herein can be configured to encompass features such as subscription management and other customer-centric areas that traditional distribution platforms have not effectively managed.

### Single Pane of Glass

The Single Pane of Glass (SPoG) can provide a comprehensive solution that aims to address these multifaceted challenges. It can be configured to provide a holistic, user-friendly, and efficient platform that streamlines the distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to streamline SKU management and product localization, SPoG integrates data from various OEMs into a single platform. This not only ensures data consistency but also significantly reduces the potential for errors. Furthermore, it provides capabilities to manage and distribute localized SKUs efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, streamlining inventory management, ensuring compliance, simplifying SKU management, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. RTDS offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies SKU management and localization by integrating data from various OEMs, ensuring data consistency and reducing error potential. Its capabilities for managing and distributing localized SKUs align with specific market needs efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides a myriad of advantages. Firstly, it offers a holistic solution to the longstanding problems in the distribution industry. With the RTDM's capabilities, SPoG can enhance supply chain visibility, streamline inventory management, ensure compliance, simplify SKU management, and deliver a superior customer experience.

The real-time tracking and analytics offered by RTDM improve SPoG's ability to manage the supply chain and inventory effectively. It provides accurate and up-to-date information, enabling distributors to make informed decisions quickly.

Integrating SPoG with RTDM also ensures data consistency and reduces errors in SKU management. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

The SPoG Mobile Application (Mobile App) system and methods uniquely address challenges within the global distribution industry. Its user-friendly and intuitive interface empowers distributors and customers alike to navigate the complex distribution landscape with ease and efficiency. One of the core advantages lies in its ability to enhance distribution management by providing real-time visibility into inventory, orders, and supply chain operations. This transparency enables distributors to make informed decisions, optimize their processes, and adapt in real time to changing market dynamics.

The SPoG UI Mobile App facilitates connection between distributors and customers, aligning with the evolving consumer-centric paradigm. It allows customers to effortlessly access product information, place orders, and track their deliveries, all from the convenience of their mobile devices. This direct engagement not only improves customer satisfaction but also strengthens brand loyalty and trust.

In some embodiments, the SPoG UI's integration of push notifications improves the ability of distribution systems in keeping all users, from vendors to customers, informed and engaged. It enables distributors to proactively communicate order updates, promotions, and relevant product information, as well as sophisticated insights, to customers in real-time. This level of engagement is invaluable in meeting the rapidly evolving expectations of modern consumers, who demand timely and personalized interactions.

Furthermore, the SPoG UI's image recognition and SKU mapping capabilities offer a significant advantage by simplifying the product identification process. Customers can easily scan product images, and the advanced AI algorithms accurately map them to the correct Stock Keeping Units (SKUs). This dynamic SKU creation not only streamlines the ordering process but also reduces manual data entry and potential errors, an important advantage in enhancing operational efficiency.

Offline Data Caching in the SPoG UI Mobile App ensures uninterrupted functionality, even in offline environments. By locally storing critical data on the user's device and synchronizing it with backend servers when connectivity is restored, it guarantees access to current information at all times. This resilience in the face of connectivity challenges is a significant advantage, especially in regions with sporadic or limited internet access.

Thereby, the SPoG UI Mobile App offers comprehensive advantages, from enhanced distribution management and real-time customer engagement to image recognition and offline functionality. These features collectively empower distributors to thrive in a rapidly evolving distribution landscape while providing customers with a convenient distribution experience.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates one embodiment of a system for supply chain and distribution management.
FIG. 4 depicts an embodiment of an advanced distribution platform and provides a technology distribution platform for optimizing the management and operation of distribution networks.
FIG. 5 illustrates an RTDM module, according to an embodiment.
FIG. 6 illustrates a SPoG UI, according to an embodiment.
FIG. 7 illustrates an architecture of a SPoG UI Mobile App system and UI, according to an embodiment.
FIG. 8 is a flow diagram of a method for real-time data integration, analysis, and notification within a SPoG UI Mobile App system, according to some embodiments of the present disclosure.
FIG. 9A is a flow diagram of a method for Image Capture and SKU Mapping within an SPoG UI Mobile App system, according to some embodiments of the present disclosure.
FIG. 9B is a flow diagram of a method for Enhanced Product Lookup of the SPoG UI Mobile App system, according to some embodiments of the present disclosure.
FIG. 10 is a flow diagram of a method for managing an offline data cache in a SPoG UI Mobile App, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.
FIGS. 13A to 13F depict various screens and functionalities of the Mobile App SPoG UI, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

In some embodiments, a platform supporting supply chain and distribution management is disclosed. In other embodiments, a platform to support distribution management, not supply chain management, is provided where the distribution platform is characterized as a digital-centric environment directed to the distribution of technology-oriented products and services, such as cloud services, software, and hardware, specifically targeting businesses, IT professionals, and the like. In contrast to platforms like AMAZON, a distribution platform as described herein does not engage in retail of a wide array of consumer goods, such as clothing, groceries, or home items. The operational model of the distribution platform is generally directed toward business-to-business interactions, rather than a consumer-oriented approach. The platform's infrastructure can be configured to support distinctions of digital and IT distribution, where the platform's logistics are exclusively configured for providing recommendations, insights, bundles, and the like to this audience, rather than the consumer-oriented approach.

It should be understood that the operations shown in the exemplary methods are not exhaustive and that other operations can be performed as well before, after, or between any of the illustrated operations. In some embodiments of the present disclosure, the operations can be performed in a different order and/or vary.

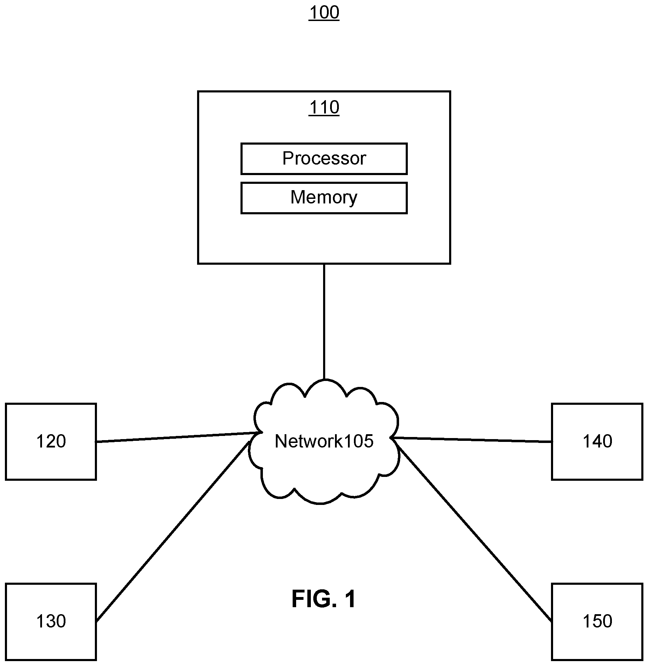

FIG. 1 illustrates an operating environment 100 of a distribution platform, referred to as System 110 in this embodiment. System 110 operates within the context of an information technology (IT) distribution model, catering to various stakeholders such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 are the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play an important role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to streamline their supply chain operations, manage pricing and promotions, and gain insights into customer preferences and market trends. By integrating with System 110, vendors can expand their reach, access new markets, and enhance their overall visibility and competitiveness.

Resellers 150 are intermediaries within the distribution model who bridge the gap between vendors and customers. They play an essential role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there are various dynamics and characteristics that contribute to its effectiveness. These dynamics include real-time data exchange, integration with existing enterprise systems, scalability, and flexibility. System 110 ensures that relevant data is exchanged in real-time between stakeholders, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

Scalability and flexibility are key characteristics of System 110. It can accommodate the growing demands of the IT distribution model, whether it involves an expanding customer base, an increasing number of vendors, or a wider range of IT products and services. System 110 is designed to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these stakeholders. By leveraging real-time data exchange, integration, scalability, and flexibility, System 110 empowers stakeholders to optimize their operations, enhance customer experiences, and drive business success within the IT distribution ecosystem.

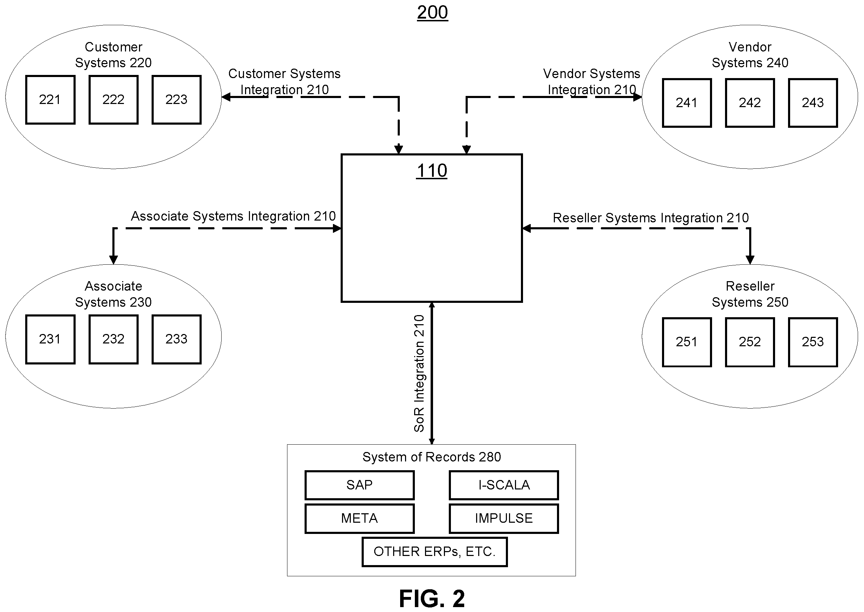

FIG. 2 illustrates an operating environment 200 of the distribution platform, which builds upon the elements introduced in FIG. 1. Within this operating environment, integration points 210 facilitate data flow and connectivity between various customer systems 220, vendor systems 240, reseller systems 260, and other entities involved in the distribution process. The diagram showcases the interconnectedness and the mechanisms that enable efficient collaboration and data-driven decision-making.

Operating environment 200 can include System 110 as a distribution platform that serves as the central hub for managing and facilitating the distribution process. System 110 can be configured to perform functions and operations as a bridge between customer systems 220, vendor systems 240, reseller systems 260, and other entities within the ecosystem. It can integrate communication, data exchange, and transactional processes, providing stakeholders with a unified and streamlined experience. Moreover, operating environment 200 can include one or more integration points 210 to ensure smooth data flow and connectivity. These integration points include:

Customer System Integration: Integration point 210 can enable System 110 to connect with customer systems 220, enabling efficient data exchange and synchronization. Customer systems 220 may include various entities such as customer system 221, customer system 222, and customer system 223. These systems represent the internal systems utilized by customers, such as enterprise resource planning (ERP) or customer relationship management (CRM) systems. Integration with customer systems 220 empowers customers to access real-time inventory information, pricing details, order tracking, and other relevant data, enhancing their visibility and decision-making capabilities.

Vendor System Integration: Integration point 210 facilitates the connection between System 110 and vendor systems 240. Vendor systems 240 may include entities such as vendor system 241, vendor system 242, and vendor system 243, representing the inventory management systems, pricing systems, and product catalogs employed by vendors. Integration with vendor systems 240 ensures that vendors can efficiently update their product offerings, manage pricing and promotions, and receive real-time order notifications and fulfillment details.

Reseller System Integration: Integration point 210 provides capabilities for reseller systems 260 to connect with System 110. Reseller systems 260 may encompass entities such as reseller system 261, reseller system 262, and reseller system 263, representing the sales systems, customer management systems, and service delivery platforms employed by resellers. Integration with reseller systems 260 empowers resellers to access up-to-date product information, manage customer accounts, track sales performance, and provide value-added services to their customers.

Other Entity System Integration: Integration point 210 also enables connectivity with other entities involved in the distribution process. These entities may include entities such as entity system 271, entity system 272, and entity system 273. Integration with these systems ensures communication and data exchange, facilitating collaboration and efficient distribution processes.

Integration points 210 within the operating environment 200 are facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable data exchange.

In some embodiments, System 110 can incorporates authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable stakeholders to operate within a connected ecosystem. Data generated at various stages of the distribution process, including customer orders, inventory updates, shipment details, and sales analytics, flows between customer systems 220, vendor systems 240, reseller systems 260, and other entities. This data exchange facilitates real-time visibility, enables data-driven decision-making, and enhances operational efficiency throughout the distribution platform.

In some embodiments, System 110 leverages advanced technologies such as Typescript, NodeJS, ReactJS, .NET Core, C#, and other suitable technologies to support the integration points 210 and enable communication within the operating environment 200. These technologies provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable stakeholders to operate within a connected ecosystem. Data generated at various touchpoints, including customer orders, inventory updates, pricing changes, or delivery status, flows between the different entities, systems, and components. The integrated data is processed, harmonized, and made available in real-time to relevant stakeholders through System 110. This real-time access to accurate and up-to-date information empowers stakeholders to make informed decisions, optimize supply chain operations, and enhance customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

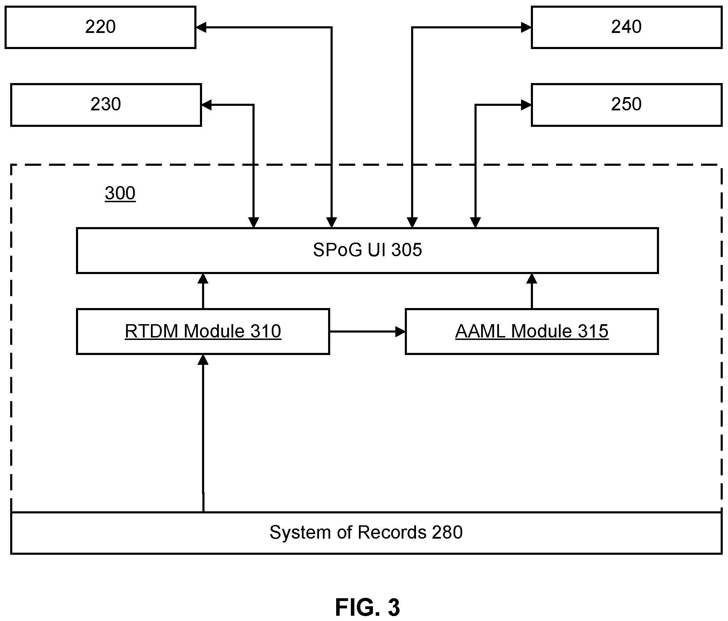

FIG. 3 illustrates a system 300 for supply chain and distribution management. System 300 (FIG. 3) is a supply chain and distribution management solution designed to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing stakeholders with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, empowering them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and streamlined workflows. Through API integrations, data synchronization mechanisms, and event-driven architectures, SPoG UI 305 ensures smooth information flow and enables collaborative decision-making across the distribution ecosystem.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another key component of System 300, responsible for ensuring the flow of data within the distribution ecosystem. It aggregates data from multiple sources, harmonizes it, and ensures its availability in real-time.

To illustrate the capabilities of the RTDM module, let's consider an example. In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data is then made available in real-time, allowing stakeholders to access accurate and up-to-date information across the supply chain.

The RTDM module 310 can be configured to capture changes in data across multiple transactional systems in real-time. It employs a sophisticated Change Data Capture (CDC) mechanism that constantly monitors the transactional systems, detecting any updates or modifications. The CDC component is specifically designed to work with various transactional systems, including legacy ERP systems, Customer Relationship Management (CRM) systems, and other enterprise-wide systems, ensuring compatibility and flexibility for businesses operating in diverse environments.

By having access to real-time data, stakeholders can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Leveraging powerful analytics tools and algorithms such as Apache Spark, TensorFlow, or scikit-learn, the AAMI, module extracts valuable insights from the collected data. It enables advanced analytics, predictive modeling, anomaly detection, and other machine learning capabilities.

For instance, the AAMI, module can analyze historical sales data to identify seasonal patterns and predict future demand. It can generate forecasts that help optimize inventory levels, ensure stock availability during peak seasons, and minimize excess inventory costs. By leveraging machine learning algorithms, the AAMI, module automates repetitive tasks, predicts customer preferences, and optimizes supply chain processes.

In addition to demand forecasting, the AAMI, module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a holistic and connected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. By leveraging a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain and distribution management.

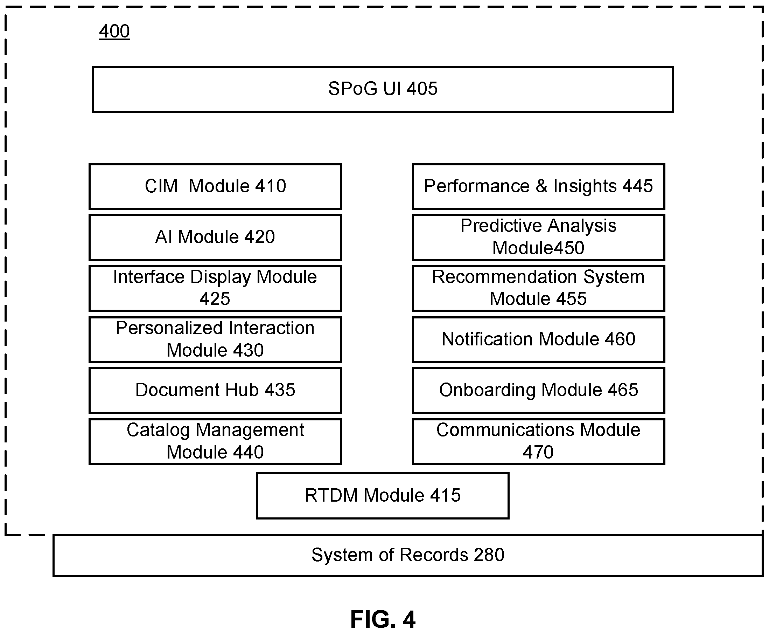

FIG. 4 depicts an embodiment of an advanced distribution platform including System 400 for managing a complex distribution network, which can be an embodiment of System 300, and provides a technology distribution platform for optimizing the management and operation of distribution networks. System 400 includes several interconnected modules, each serving specific functions and contributing to the overall efficiency of supply chain operations. In some embodiments, these modules can include SPoG UI 405, CIM 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470.

System 400, as an embodiment of System 300, leverages a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 405, in some embodiments, serves as the central interface within System 400, providing stakeholders with a unified view of the entire distribution network. It utilizes frontend technologies such as ReactJS, TypeScript, and Node.js to create interactive and responsive user interfaces. These technologies enable the SPoG UI 405 to deliver a user-friendly experience, allowing stakeholders to access relevant information, navigate through different modules, and perform tasks efficiently.

The CIM 410, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for stakeholders.

The RTDM module 415, or Real-Time Data Mesh module, is a critical component of System 400 that ensures the smooth flow of data across the distribution ecosystem. It utilizes technologies such as Apache Kafka, Apache Flink, or Apache Pulsar for data ingestion, processing, and stream management. These technologies enable the RTDM module 415 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows stakeholders to access up-to-date and accurate information for informed decision-making.

The AI module 420 within System 400 leverages advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 420 can utilize predictive models to forecast demand, allowing stakeholders to optimize inventory management and minimize stockouts or overstock situations.

The Interface Display Module 425 focuses on presenting data and information in a clear and user-friendly manner. It utilizes technologies such as HTML, CSS, and JavaScript frameworks like ReactJS to create interactive and responsive user interfaces. These technologies allow stakeholders to visualize data using various data visualization techniques, such as graphs, charts, and tables, enabling efficient data comprehension, comparison, and trend analysis.

The Personalized Interaction Module 430 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, enhancing customer satisfaction and driving sales.

The Document Hub 435 serves as a centralized repository for storing and managing documents within System 400. It utilizes technologies like SeeBurger and Elastic Cloud for efficient document management, storage, and retrieval. For instance, the Document Hub 435 can employ SeeBurger's document management capabilities to categorize and organize documents based on their types, such as contracts, invoices, product specifications, or compliance documents, allowing stakeholders to easily access and retrieve relevant documents when needed.

The Catalog Management Module 440 enables the creation, management, and distribution of up-to-date product catalogs. It ensures that stakeholders have access to the latest product information, including specifications, pricing, availability, and promotions. Technologies like Kentico and Akamai are employed to facilitate catalog updates, content delivery, and caching. For example, the module can leverage Akamai's content delivery network (CDN) to deliver catalog information to stakeholders quickly and efficiently, regardless of their geographical location.

The Performance and Insight Markers Display 445 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling stakeholders to take proactive measures to optimize operations.

The Predictive Analytics Module 450 employs machine learning algorithms and predictive models to forecast demand patterns, optimize inventory levels, and enhance overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing stakeholders to optimize inventory levels and minimize costs.

The Recommendation System Module 455 focuses on providing intelligent recommendations to stakeholders within the distribution network. It generates personalized recommendations for products or services based on customer data, historical trends, and machine learning algorithms. Technologies like Adobe Target and Apache Spark are employed for data analysis, modeling, and delivering targeted recommendations. For instance, the module can leverage Adobe Target's recommendation engine to analyze customer preferences and behavior, and deliver personalized product recommendations across various channels, enhancing customer engagement and driving sales.

The Notification Module 460 enables the distribution of real-time notifications to stakeholders regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to stakeholders' devices, ensuring timely and relevant information dissemination.

The Self-Onboarding Module 465 facilitates the onboarding process for new stakeholders entering the distribution network. It provides guided steps, tutorials, or documentation to help users become familiar with the system and its functionalities. Technologies such as Okta and Kentico are employed to ensure secure user authentication, access control, and self-learning resources. For instance, the module can utilize Okta's identity and access management capabilities to securely onboard new stakeholders, providing them with appropriate access permissions and guiding them through the system's functionalities.

The Communication Module 470 enables communication and collaboration within System 400. It provides channels for stakeholders to interact, exchange messages, share documents, and collaborate on projects. Technologies like Apigee Edge and Adobe Launch are employed to facilitate secure and efficient communication, document sharing, and version control. For example, the module can utilize Apigee Edge's API management capabilities to ensure secure and reliable communication between stakeholders, enabling them to collaborate effectively.

Thereby, System 400 can incorporate various modules that utilize a diverse range of technologies and algorithms to optimize supply chain and distribution management. These modules, including SPoG UI 405, CIM 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

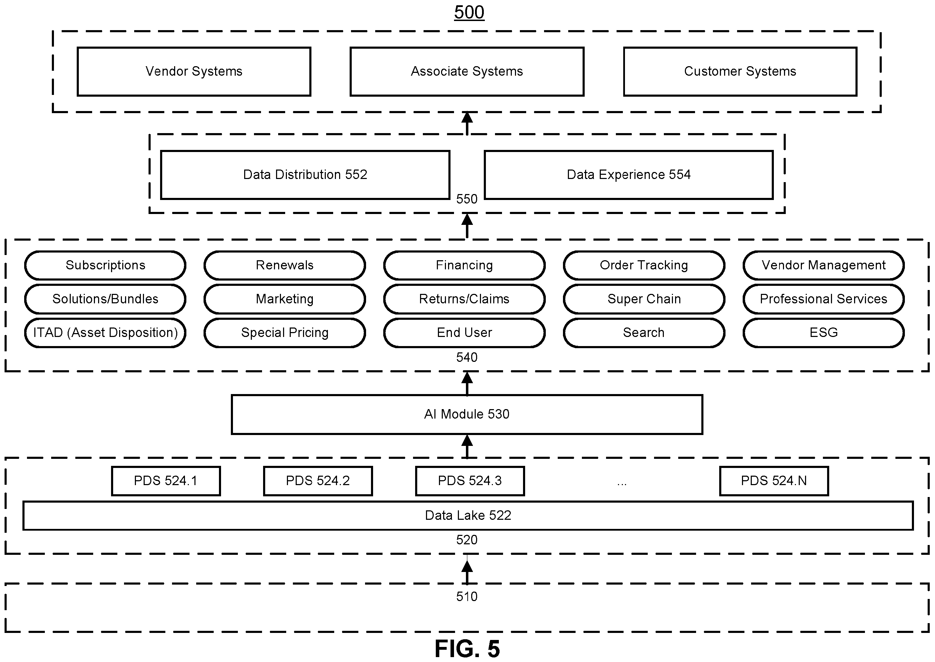

FIG. 5 illustrates RTDM module 500, according to an embodiment. RTDM module 500, which can be an embodiment of RTDM module 310, can include interconnected components, processes, and sub-systems configured to enable real-time data management and analysis.

The RTDM module 500, as depicted in FIG. 5, represents an effective data mesh and change capture component within the overall system architecture. The module is designed to provide real-time data management and harmonization capabilities, enabling efficient operations within the supply chain and distribution management domain.

RTDM module 500 can include an integration layer 510 (also referred to as a "system of records") that integrates with various enterprise systems. These enterprise systems can include ERPs such as SAP, Impulse, META, and I-SCALA, among others, and other data sources. Integration layer 510 can process data exchange and synchronization between RTDM module 500 and these systems. Data feeds are established to retrieve relevant information from the system of records, such as sales orders, purchase orders, inventory data, and customer information. These feeds enable real-time data updates and ensure that the RTDM module operates with the most current and accurate data.

RTDM module 500 can include data layer 520 configured to process and translate data for retrieval and analysis. At the core of the data layer is the data mesh, a cloud-based infrastructure designed to provide scalable and fault-tolerant data storage capabilities. Within the data mesh, multiple Purposive Datastores (PDS) are deployed to store specific types of data, such as customer data, product data, or inventory data. Each PDS is optimized for efficient data retrieval based on specific use cases and requirements. The PDSes are configured to store specific types of data, such as customer data, product data, finance data, and more. These PDS serve as repositories for harmonized and standardized data, ensuring data consistency and integrity across the system.

In some embodiments, RTDM module 500 implements a data replication mechanism to capture real-time changes from multiple data sources, including transactional systems like ERPs (e.g., SAP, Impulse, META, I-SCALA). The captured data is then processed and harmonized on-the-fly, transforming it into a standardized format suitable for analysis and integration. This process ensures that the data is readily available and up-to-date within the data mesh, facilitating real-time insights and decision-making.

More specifically, data layer 520 within the RTDM module 500 can be configured as a powerful and flexible foundation for managing and processing data within the distribution ecosystem. In some embodiments, data layer 520 can encompasses a highly scalable and robust data lake, which can be referred to as data lake 522, along with a set of purposive datastores (PDSes), which can be denoted as PDSes 524.1 to 524.N. These components work in harmony to ensure efficient data management, harmonization, and real-time availability.

At the core of data layer 520 lies the data lake, data lake 522, a state-of-the-art storage and processing infrastructure designed to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Leveraging the elasticity and fault-tolerance of cloud-based storage, data lake 522 can accommodate the influx of data from diverse sources.

Associated with data lake 522, a population of purposive datastores, PDSes 524.1 to 524.N, can be employed. Each PDS 524 can function as a purpose-built repository optimized for storing and retrieving specific types of data relevant to the supply chain domain. In some non-limiting examples, PDS 524.1 may be dedicated to customer data, storing information such as customer profiles, preferences, and transaction history. PDS 524.2 may be focused on product data, encompassing details about SKU codes, descriptions, pricing, and inventory levels. These purposive datastores allow for efficient data retrieval, analysis, and processing, catering to the diverse needs of supply chain stakeholders.

To ensure real-time data synchronization, data layer 520 can be configured to employ one or more sophisticated change data capture (CDC) mechanisms. These CDC mechanisms are integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 520 ensures that the data within the data lake 522 and PDSes 524 remains up-to-date, providing stakeholders with real-time insights into the distribution ecosystem.

In some embodiments, data layer 520 can be implemented to facilitate integration with existing enterprise systems using one or more frameworks, such as .NET or Java, ensuring compatibility with a wide range of existing systems and providing flexibility for customization and extensibility. For example, data layer 520 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 520 leverages the capabilities of distributed computing frameworks, such as Apache Spark or Apache Flink in some non-limiting examples. These frameworks can enable parallel processing and distributed computing across large-scale datasets stored in the data lake and PDSes. By leveraging these frameworks, supply chain stakeholders can perform complex analytical tasks, apply machine learning algorithms, and derive valuable insights from the data. For instance, data layer 520 can leverage Apache Spark's machine learning libraries to develop predictive models for demand forecasting, optimize inventory levels, and identify potential supply chain risks.

In some embodiments, data layer 520 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 520 can implement data lineage and audit trail mechanisms, allowing stakeholders to trace the origin and history of data, ensuring data integrity and compliance with regulatory requirements.

In some embodiments, data layer 520 can be deployed in a cloud-native environment, leveraging containerization technologies such as Docker and orchestration frameworks like Kubernetes. This approach ensures scalability, resilience, and efficient resource allocation. For example, data layer 520 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 520 of RTDM module 500 can incorporate a highly scalable data lake, data lake 522, along with purpose-built PDSes, PDSes 524.1 to 524.N, and employing sophisticated CDC mechanisms, data layer 520 ensures efficient data management, harmonization, and real-time availability. The integration of diverse technology stacks, such as .NET or Java, and distributed computing frameworks like Apache Spark, enables powerful data processing, advanced analytics, and machine learning capabilities. With robust data governance and security measures, data layer 520 ensures data integrity, confidentiality, and compliance. Through its scalable infrastructure and integration with existing systems, data layer 520 empowers supply chain stakeholders to make data-driven decisions, optimize operations, and drive business success in the dynamic and complex distribution environment.

RTDM module 500 can include an AI module 530 configured to implement one or more algorithms and machine learning models to analyze the stored data in data layer 520 and derive meaningful insights. In some non-limiting examples, AI module 530 can apply predictive analytics, anomaly detection, and optimization algorithms to identify patterns, trends, and potential risks within the supply chain. AI module 530 can continuously learns from new data inputs and adapts its models to provide accurate and up-to-date insights. AI module 530 can generate predictions, recommendations, and alerts and publish such insights to dedicated data feeds.

Data engine layer 540 comprises a set of interconnected systems responsible for data ingestion, processing, transformation, and integration. Data engine layer 540 of RTDM module 500 can include a collection of headless engines 540.1 to 540.N that operate autonomously. These engines represent distinct functionalities within the system and can include, for example, one or more recommendation engines, insights engines, and subscription management engines. Engines 540.1 to 540.N can leverage the harmonized data stored in the data mesh to deliver specific business logic and services. Each engine is designed to be pluggable, allowing for flexibility and future expansion of the module's capabilities. Exemplary engines are shorn in FIG. 5, which are not intended to be limiting. Any additional headless engine can be included in data engine layer 540 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms are applied to cleanse, aggregate, and enrich the data, making it ready for further analysis and integration.

Further, to facilitate integration and access to RTDM module 500, a data distribution mechanism can be employed. Data distribution mechanism 545 can be configured to include one or more APIs to facilitate distribution of data from the data mesh and engines to various endpoints, including user interfaces, micro front-ends, and external systems.

Experience layer 550 focuses on delivering an intuitive and user-friendly interface for interacting with supply chain data. Experience layer 550 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 500 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, up-to-date information and insights to make informed decisions and optimize supply chain operations. Accordingly, RTDM module 500 facilitates supply chain and distribution management by providing a scalable, real-time data management solution. Its innovative architecture allows for the rich integration of disparate data sources, efficient data harmonization, and advanced analytics capabilities. The module's ability to replicate and harmonize data from diverse ERPs, while maintaining auditable and repeatable transactions, provides a distinct advantage in enabling a unified view for vendors, resellers, customers, end customers, and other entities in a distribution system, including an IT distribution system.

### SINGLE PANE OF GLASS UI

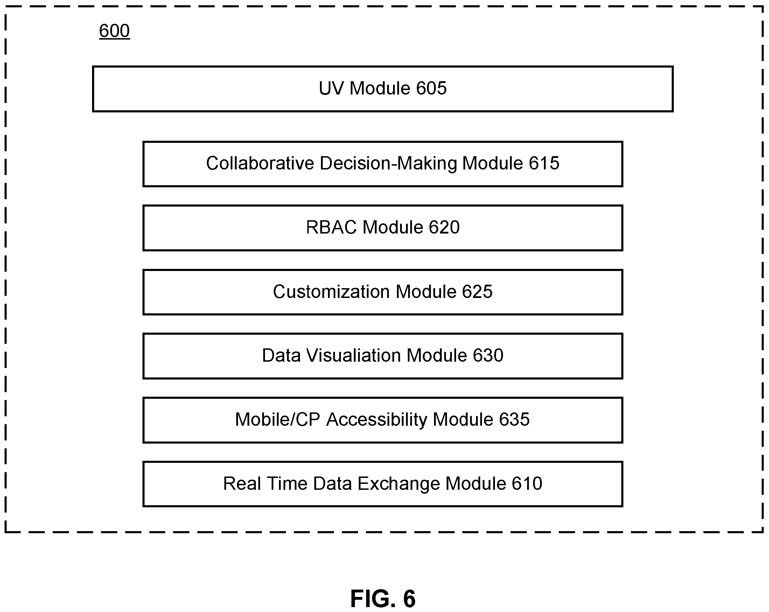

FIG. 6A illustrates SPoG UI, according to an embodiment. SPoG UI 600. In some embodiments, SPoG UI 600, which can be an embodiment of SPoG UI 305, represents a comprehensive and intuitive user interface designed to provide stakeholders with a unified and customizable view of the entire distribution ecosystem. It combines a range of features and functionalities that enable users to gain a comprehensive understanding of the supply chain and efficiently manage their operations.

SPoG UI 600 can include a Unified View (UV) Module 605, which provides stakeholders with a centralized and customizable dashboard-style layout. This module allows users to access real-time data, analytics, and functionalities tailored to their specific roles and responsibilities within the distribution ecosystem. The UV Module 605 serves as a single entry point for users, offering a holistic and comprehensive view of the supply chain operations and empowering them to make data-driven decisions.

SPoG UI 600 integrates with the Real-Time Data Exchange Module 610, to facilitate continuous exchange of data between SPoG UI 600 and RTDM 310, to leverage one or more data sources, which can include one or more ERPs, CRMs, or other sources. Through this module, stakeholders can access up-to-date, accurate, and harmonized data. Real-time data synchronization ensures that the information presented in SPoG UI 600 reflects the latest insights and developments across the supply chain. This integration enables stakeholders to make informed decisions based on accurate and synchronized data.

The Collaborative Decision-Making Module 615 within SPoG UI 600 fosters real-time collaboration and communication among stakeholders. This module enables the exchange of information, initiation of workflows, and sharing of insights and recommendations. By integrating with the RTDM module 310/500, the Collaborative Decision-Making Module 615 ensures that stakeholders can collaborate effectively based on accurate and synchronized data. This promotes overall operational efficiency and collaboration within the distribution ecosystem.

To ensure secure and controlled access to functionalities and data, SPoG UI 600 incorporates the Role-Based Access Control (RBAC) Module 620. Administrators can define roles, assign permissions, and control user access based on their responsibilities and organizational hierarchy. The RBAC Module 620 ensures that only authorized users can access specific features and information, safeguarding data privacy, security, and compliance within the distribution ecosystem.

The Customization Module 625 empowers users to personalize their dashboard and tailor the interface to their preferences and needs. Users can arrange widgets, charts, and data visualizations to prioritize the information most relevant to their specific roles and tasks. This module allows stakeholders to customize their view of the supply chain operations, providing a user-centric experience that enhances productivity and usability.

SPoG UI 600 incorporates a powerful Data Visualization Module 630, which enables stakeholders to analyze and interpret supply chain data through interactive dashboards, charts, graphs, and visual representations. Leveraging advanced visualization techniques, this module presents complex data in a clear and intuitive manner. Users can gain insights into key performance indicators (KPIs), trends, patterns, and anomalies, facilitating data-driven decision-making and strategic planning.

SPoG UI 600 can include Mobile and Cross-Platform Accessibility Module 635 to ensure accessibility across multiple devices and platforms. Stakeholders can access the interface from desktop computers, laptops, smartphones, and tablets, allowing them to stay connected and informed while on the go. This module optimizes the user experience for different screen sizes, resolutions, and operating systems, ensuring access to real-time data and functionalities across various devices.

By integrating these reference elements/modules within SPoG UI 600 and leveraging its integration capabilities with the RTDM module 310/500, stakeholders can benefit from a powerful and user-friendly interface for supply chain and distribution management. The Unified View (UV) Module 605 provides a customizable and holistic view of the supply chain and distribution environment, while the Real-Time Data Exchange Module 610 ensures accurate and up-to-date data synchronization. The Collaborative Decision-Making Module 615 promotes effective communication and collaboration, and the RBAC Module 620 ensures secure access control. The Customization Module 625, Data Visualization Module 630, and Mobile and Cross-Platform Accessibility Module 635 enhance the user experience, data analysis, and accessibility, respectively. Together, these modules enable stakeholders to make informed decisions, optimize supply chain operations, and drive business efficiency within the distribution ecosystem.

SPoG 600 can incorporate high-velocity data in data-rich environments. In contemporary data-rich environments, conventional UI designs frequently grapple with presenting a large amount of information in an understandable, efficient, and visually appealing manner. The challenge intensifies when data is dynamic, changing in real-time, and needs to be displayed effectively in single-pane environments that emphasize clean, white-space-oriented designs.

SPoG 605 UI can be configured to manage real-time data efficiently, maintaining a visually clean interface without compromising performance. This innovative approach includes a unique configuration of the UI structure, responsive data visualizations, real-time data handling methods, adaptive information architecture, and white space optimization.

SPoG 605 UI is structured around a grid-based layout system, leveraging CSS Grid and Flexbox technologies. This structure offers the flexibility to create a fluid layout with elements that adjust automatically to the available space and content. HTML5 and CSS3 serve as the foundational technologies for creating the UI, while JavaScript, specifically React.j s, manages the dynamic aspects of the UI.

It should be understood that the operations shown in the exemplary methods are not exhaustive and that other operations can be performed as well before, after, or between any of the illustrated operations. In some embodiments of the present disclosure, the operations can be performed in a different order and/or vary.

### MOBILE APPLICATION ARCHITECTURAL FRAMEWORK

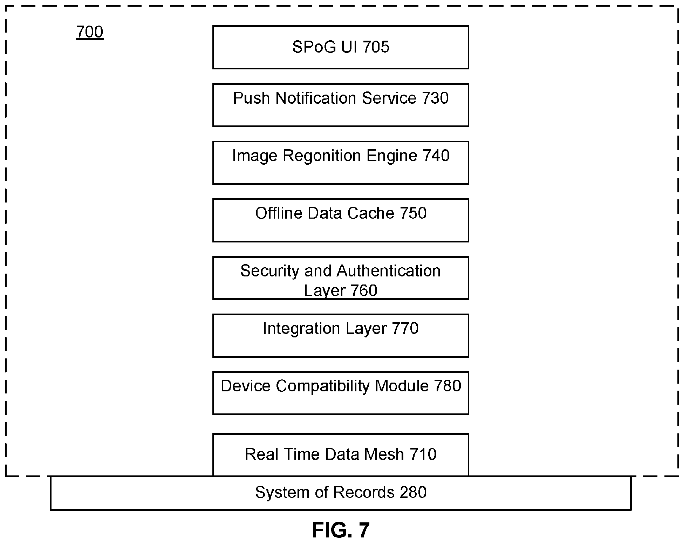

FIG. 7 illustrates the architectural framework of the Mobile App within the cloud distribution platform, highlighting its core components. The Mobile App architecture 700 encompasses the User Interface (UI) Layer 705, data layer 710, Push Notification Service 720, Image Recognition and SKU Mapping Engine 730, Offline Data Cache 740, Security and Authentication Layer 750, Integration with Backend Systems 760, and Device Compatibility 770. This architecture is designed to provide users with real-time data access transaction capabilities, enhancing their experience in a dynamic and evolving market.

In some embodiments, UI Layer 705 can serve as the central point of interaction for users within system 700. In one non-limiting examples, UI 705 can be an embodiment of a SPoG UI, such as SPoG UI 305, 410, 600, or any other UI, that allows users, such as one or more vendors, customers, associates, resellers, etc., to easily navigate through different modules, access relevant information, and perform various tasks related to the distribution platform. The UI 705 is designed to be intuitive, user-friendly, and responsive, enabling users to efficiently interact with the system.

UI Layer 705 provides the central point of interaction between the user and the app's functionalities. It is configured to offer a user-friendly and intuitive experience, providing users, including customers, vendors, associates, resellers, and the like, with access to the app's extensive features and capabilities. The UI Layer is thoughtfully designed with a responsive and mobile-friendly layout, catering to the diverse range of devices and screen sizes that users may employ. The UI Layer prioritizes the user's perspective, employing a user-centric design approach. This entails the thoughtful arrangement of elements, such as menus, buttons, and navigation bars, to enhance the user's ability to interact with the application efficiently. The user interface is engineered to facilitate effortless navigation through the app. It employs clear and logically structured menus, intuitive icons, and user-friendly labels to guide users through the app's functionalities without confusion.

UI Layer 705 can be purposefully user-friendly. Therefore, the UI optimizes screen real estate, ensuring that information and actions are presented in a clear and organized manner, enhancing readability and ease of use. In some embodiments, the design includes abundant white space to further augment readability and ease of use. UI Layer 705 is configured to include a responsive design. That is, the user interface dynamically adjusts to different screen sizes and orientations. Whether the user accesses the app on a large desktop monitor or a small smartphone screen, the interface remains user-friendly and visually appealing. UI Layer 705 is optimized for mobile platforms. This optimization encompasses touch-friendly controls, efficient use of screen space, and responsive design elements that adapt to mobile screens. UI Layer 705 ensures a consistent user experience across different platforms, such as web browsers and mobile apps. Users can expect a familiar interface regardless of the device or platform they use to access the application. Accessibility features can be incorporated into the UI Layer, making the application usable by individuals with diverse abilities. These features include keyboard navigation, screen reader compatibility, and adherence to accessibility standards. UI Layer 705 is designed with scalability in mind. It accommodates potential future enhancements and additions to the application, ensuring that the user interface remains adaptable to evolving requirements.

In some embodiments, data layer 710 can be configured to enable an efficient flow of data across the SKU management ecosystem. Data layer 710, which can be an embodiment of RTDM module 310, 415, 500, or any other data layer, can encompasses a data lake, which serves as a scalable and robust storage infrastructure for storing structured and unstructured data related to SKUs. In some embodiments, data layer 710 integrates with the RTDM module, enabling real-time data exchange and synchronization. This integration ensures that the data within the data layer 710 is up-to-date and readily available for SKU management operations.

In some embodiments, data layer 710 can be an embodiment of an RTDM module, such as RTDM module 310 or RTDM module 415, or RTDM module 500. In some embodiments, data layer 710 can be a separate data layer that interacts with an RTDM module. As described above, an RTDM module can be configured to function as an ERP-agnostic real-time data mesh. In some embodiments, RTDM module collects and incorporates data from a System of Records layer, including the data from various enterprise systems such as ERPs, into the data lake within the data layer 710.

The data layer 710 acts as a repository for the harmonized and standardized data obtained from the RTDM module. Within the data layer 710, various purposive datastores are deployed to store specific types of data, such as customer data, product data, finance data, and more. These purposive datastores optimize data retrieval based on specific use cases and requirements, ensuring efficient distribution and order management.

By leveraging the data available within the data layer 710 and the real-time capabilities of the RTDM module, system 700 is configured to enable an efficient, accurate SKU creation process that is aligned with the most current information. This interaction between the data layer 710 and the RTDM module facilitates an integrated data flow and enables the dynamic order and distribution processes to be carried out effectively within the overall distribution ecosystem.

data layer 710, which can embody or be operably connected with RTDM architecture (e.g., 500) facilitates management and processing of real-time data within the supply chain and distribution management domain. This module is configured to facilitate data retrieval, transformation, and analysis, ensuring that users have receive current and precise information for data-driven decision-making.

In an example, data layer 710 is coupled with the RTDM module, forming an integral component of the system's architecture. Its primary objective is to extract, process, and translate data from various sources via RTDM module 500 to support generation of insights and integration with enterprise systems, data layer 710 integrates via the RTDM module with a diverse set of enterprise systems, including prominent ERPs such as SAP, Impulse, META, and I-SCALA, among others. This integration is achieved through an Integration Layer 510, often referred to as a "system of records." Integration Layer 510 establishes data feeds that facilitate the exchange and synchronization of critical information, such as sales orders, purchase orders, inventory data, and customer details. By maintaining real-time data updates, data layer 620 ensures that the RTDM module operates with the most current and precise data, a fundamental requirement for efficient supply chain management.

Within data layer 710, a bus/gateway to data layer 520 performs processing and translating data for retrieval and analysis. The core of the data layer is the data mesh, a cloud-based infrastructure known for its scalability and fault-tolerant data storage capabilities. This data mesh encompasses multiple Purposive Datastores (PDSes) (denoted as PDSes 524.1 to 524.N), each optimized for specific types of data relevant to the supply chain domain. For instance, PDS 524.1 may house customer data, while PDS 524.2 may focus on product data, including SKU details, descriptions, pricing, and inventory levels. These PDSes act as repositories for harmonized and standardized data, ensuring data consistency and integrity across the entire system.

data layer 710 is configured to implement a data replication mechanism that captures real-time changes from various data sources, including transactional systems like ERPs. This captured data is processed in real time and transformed into a standardized format suitable for analysis and integration. This real-time data capture and transformation process guarantees that the data within the data mesh and PDSes remains current, enabling stakeholders, particularly well-versed engineers, to access real-time insights and make timely decisions.

Also, data layer 710 can leverage current and future technologies for data processing and analytics. Distributed computing frameworks like Apache Spark or Apache Flink enable parallel processing and distributed computing across large datasets stored in the data mesh and PDSes. These frameworks empower supply chain stakeholders, including engineers, to conduct intricate data analyses, apply machine learning algorithms, and extract valuable insights from the data. For example, these capabilities facilitate demand forecasting, inventory optimization, and risk identification within the supply chain.

Data governance and security are paramount within this module. Fine-grained access control mechanisms and robust authentication protocols ensure that only authorized users, including engineers, can access and modify the data within the data mesh and PDSes. Data encryption techniques safeguard sensitive supply chain information, both at rest and in transit, ensuring its protection against unauthorized access. Additionally, data layer 710 implements data lineage and audit trail mechanisms, enabling stakeholders, including engineers, to trace the history and origin of data, ensuring data integrity and regulatory compliance.

Thereby, data layer 710, operably integrated with RTDM module 500, stands as a foundational element of the supply chain and distribution management system. Its capacity to efficiently manage, transform, and provide real-time access to data empowers stakeholders, particularly well-versed engineers, with the necessary insights to optimize supply chain operations, make data-driven decisions, and navigate the complexities of the distribution environment effectively. This module's robust architecture, scalability, and integration capabilities position it as a critical asset for enhancing supply chain management in a dynamic and competitive landscape.

Push Notification Service 730 is a fundamental component of the Mobile App architecture, tightly integrated with the data layer 620/710. It operates on an event-driven architecture, where event handlers embodied and/or operably connected via the RTDM module are configured to specific distribution platform events, ensuring efficient communication with users. Such events can include price adjustments, inventory updates, order confirmations, and the like, which trigger real-time notifications delivered to users' mobile devices.

Push Notification Service 730 communicates to the RTDM via data layer 710 for real-time data retrieval based on the RTDM from various sources, including Enterprise Resource Planning (ERP) systems and other data repositories. Push Notification Service 730 can receive an event published via data layer 710 that require immediate user attention. Such events encompass matters related to vendors, customers and end customers, resellers, associates, and any other event managed by the distribution platform. These events can include dynamic price fluctuations to inventory updates that support the distribution platform's operations. Each event initiates delivery of real-time notifications to associated users' mobile devices. To ensure reliable notification delivery, the service adheres to standardized push notification protocols, such as Firebase Cloud Messaging (FCM) for Android and Apple Push Notification Service (APNs) for iOS. Engineers meticulously configure and integrate these protocols to meet platform-specific requirements.

For Android devices, Push Notification Service 730 can integrate with Firebase Cloud Messaging (FCM) to optimize handling of notifications through Firebase Cloud Functions. Push Notification Service 730 can configure a Cloud Function to serve as a trigger for sending notifications aligning FCM with the event-driven architecture. For iOS devices, Push Notification Service 730 can integrate with Apple Push Notification Service (APNs) requires specific configuration steps. Engineers manage cryptographic keys, set up the Apple Developer account, and integrate APNs into the event-driven architecture to establish secure and efficient communication channels with iOS devices.

Interaction between the Push Notification Service 730 and the data layer 710 enables data-driven intelligence and real-time user engagement. By relying on the Data Retrieval and Processing Module's capabilities in accessing diverse data sources and ERPs, the Push Notification Service ensures that users remain current with the distribution platform.

In addition, Push Notification Service 730 can operably connect with one or more AI and/or ML modules, such as AAMI, module 315. While the AAMI, module focuses on extracting valuable insights from the collected data and performing advanced analytics, predictive modeling, and anomaly detection, the Push Notification Service can complement such operations by ensuring that these insights are promptly communicated to mobile device users.

In a non-limiting example, an AAMI, module can be configured to identify seasonal patterns or to predict future demand based on historical sales data, Push Notification Service 730 can trigger real-time notifications to inform relevant users. These notifications can include forecasts related to inventory optimization, ensuring stock availability during peak seasons, and minimizing excess inventory costs. Integration of the Push Notification Service 710 ensures that the actionable insights generated by the AAML module are timely delivered to relevant.

Moreover, Push Notification Service 730 enhances the user experience by providing real-time updates on customer behavior insights generated by the AAMI, module. This information can be leveraged for targeted/behavioral marketing and personalized customer experiences. For example, when the AAML module identifies cross-selling or upselling opportunities and recommends relevant products to individual customers, the Push Notification Service can deliver these recommendations directly to users' mobile devices, enabling immediate action.

In addition to conveying insights derived via the AAMI, module, Push Notification Service 730 can integrate internally with from AAML's analytical capabilities. By analyzing data from various sources, such as social media feeds, customer reviews, market trends, and the like, the AAML module can provide sentiment analysis and trend identification. These insights can be used to tailor content of notifications communicated by Push Notification Service 730, ensuring alignment with consumer and market sentiment and preferences.

Further, integration and interoperability functions related to data flows established by integration protocols, APIs, and data connectors enable the Push Notification Service to access relevant data generated and analyzed by the AAMI, module, enhancing the precision and relevance of notifications.

Thereby, Push Notification Service 730 bridges the RTDM module, the AAML module and end-users of the system 700. It ensures that valuable insights and recommendations generated by the AAML module are communicated in real time or near real time to users, empowering them with real-time information and enhancing their decision-making capabilities within the supply chain ecosystem. This integration underscores the system's commitment to real-time data-driven decision-making, providing intelligence to optimize distribution operations. Furthermore, Push Notification Service 730 can be effectively scaled by operating in conjunction with RTDM architecture and the robust AAML processing to handle a high volume of real-time notifications and insights while incorporating error/retry mechanisms to address transient delivery issues.

Image Recognition and SKU Mapping Engine 740 leverages the mobile device's camera to scan product images. Advanced AI algorithms process these images to identify and map products to their respective Stock Keeping Units (SKUs). This dynamic SKU creation process simplifies the ordering process, reducing manual data entry and potential errors.

In an embodiment, the Image Recognition and SKU Mapping Engine 740 integrates directly with a mobile device's camera. This integration allows a user to efficiently scan product images without needing any external applications or software. Once the user captures an image, the system initiates the processing phase. The processing of these product images involves advanced AI algorithms designed for accurate product recognition. These algorithms analyze different features and attributes of the captured images, breaking them down into identifiable components. This analysis includes examining the color, shape, texture, and any markings or labels present on the product.

In a non-limiting example, consider a user scanning an image of a blue cylindrical object with a specific brand label. The algorithm first identifies the cylindrical shape and the color blue. It then focuses on the label to determine the brand and any other pertinent details. This level of detail ensures accurate product identification, even when the product's image might not be of the highest quality.

Following the analysis, the Image Recognition and SKU Mapping Engine 740 maps the identified product to its respective Stock Keeping Unit (SKU). The SKU represents a unique identifier for every distinct product and variant. For businesses, SKUs facilitate inventory tracking, order processing, and other logistical tasks.

The Engine 740 employs a dynamic SKU creation process. Rather than relying on pre-existing SKUs, this dynamic approach creates new SKUs when a product gets identified for the first time. This feature proves especially beneficial for businesses that continually introduce new products or variations. The dynamic SKU creation process ensures that every product, irrespective of its novelty, gets mapped to a unique identifier.

This dynamic process reduces the need for manual data entry. In conventional systems, a user might need to manually input details about a new product and assign it an SKU. However, with the Image Recognition and SKU Mapping Engine 740, this manual process becomes largely obsolete. The engine's capability to generate SKUs dynamically not only saves time but also minimizes potential data entry errors.

Furthermore, the integration of the Image Recognition and SKU Mapping Engine 740 with other enterprise systems streamlines the entire product recognition and ordering process. For instance, once a product gets identified and mapped to its SKU, the system can immediately update the inventory database. This real-time update ensures that stock levels remain accurate and aids in efficient order processing.

Additionally, the engine 740's AI algorithms continually learn and adapt. With every product image processed, the algorithms refine their recognition capabilities. Over time, this iterative learning process improves the engine's accuracy and reduces the likelihood of misidentification. For businesses, this means that the system becomes more reliable and efficient as more products get scanned and processed.

In another embodiment, the engine 740 also integrates with external data sources. These sources can provide additional product information, such as product specifications, pricing, and supplier details. When the engine identifies a product, it can fetch this additional information, enhancing the depth of product details available to the user.

In some embodiments, Image Recognition and SKU Mapping Engine 740 can be configured as an element of an AAML module, another module, or as a separate element of system 700. Threreby, Image Recognition and SKU Mapping Engine 740 is configured to handle item identification, order processing, and other tasks leveraging a user's mobile device. By leveraging the mobile device's imaging components, and coupling them to the advanced AI algorithms (and dynamic SKU creation processes), the engine simplifies operations, reduces errors, and streamlines workflows. With its continuous learning capabilities and integration potential, the engine stands poised to become an indispensable tool for modern enterprises.

Offline Data Cache 750 enhances utility in scenarios with limited or no internet connectivity. The Mobile App incorporates Offline Data Cache 750 that stores critical data locally on the user's device. In some non-limiting examples, information related to order status, product details, and other essential data is cached and synchronized with the backend servers when connectivity is restored. This ensures uninterrupted functionality and access to important information, even in offline environments.

In an embodiment, the Offline Data Cache 750 serves as a fundamental component of the Mobile App designed for optimal performance in varied connectivity scenarios. Recognizing the unpredictability of network connections, especially in remote or congested areas, the Offline Data Cache 750 provides users with uninterrupted access to essential data.

The core function of the Offline Data Cache 750 revolves around storing critical data locally on the user's device. By locally caching data, the system ensures that users can access relevant information even when the device loses internet connectivity. This local storage mechanism eliminates the need for real-time server interactions for every data retrieval, thereby enhancing app responsiveness and reducing wait times.

In a non-limiting example, a user attempting to access order status while traveling in a region with spotty internet coverage can benefit from cached offline data. Rather than retrieving this data in real-time from the backend server, which might be hindered due to connectivity issues, the Mobile App pulls the required data from the Offline Data Cache 750. This ensures the user gets the necessary information without any delay.

Additionally, Offline Data Cache 750 handles various types of data, including product details, order status, user preferences, and the like. When the user accesses specific data, the Mobile App caches it, allowing for quicker subsequent retrievals. Proactive caching can optimize the user experience by reducing redundant data transfers.

In some embodiments, Offline Data Cache 750 can include a synchronization mechanism. Once the device regains internet connectivity, the system initiates a synchronization algorithm with the backend servers. This process ensures that locally stored data remains current and aligned with the primary data source. Any changes made offline by the user, such as new orders or modifications to existing ones, may be updated on the backend server during this synchronization.

The synchronization process also considers potential data conflicts. In situations where the same data undergoes changes both offline on the device and on the backend server, the system employs conflict resolution protocols. These protocols determine the most recent or prioritized change, ensuring data integrity across platforms.

Also, Offline Data Cache 750 incorporates security measures recognizing the sensitivity of the data stored locally, the system can be configured to encrypt cached data. Encryption safeguards offline data from unauthorized access, mitigating risk related to the cached data in the event of a compromised device.

Thereby, Offline Data Cache 750 provides uninterrupted access to important data in offline scenarios. By storing critical data locally, synchronizing with backend servers when online, and implementing security measures, Offline Data Cache 750 enhances overall app functionality and user satisfaction.

Security and Authentication Layer 760 ensures security of user data and transactions is paramount. The Security and Authentication Layer 760 employs robust encryption mechanisms to safeguard sensitive information both at rest and in transit. It enforces authentication protocols to verify user identities, granting access only to authorized users. This layer is essential for maintaining data integrity and protecting user privacy.

Integration Module 770 integrates the Mobile App with backend systems of the cloud distribution platform. This integration ensures a constant flow of real-time data between the app and the platform's servers. It also facilitates secure and efficient transactions, including order placement, payment processing, and inventory management.

Device Compatibility Module 780 enables diversity of mobile devices and operating systems, the architecture to ensure that the Mobile App is accessible and functional across a wide range of devices, including smartphones and tablets, irrespective of their operating systems (iOS, Android, etc.). This flexibility caters to the preferences and devices of a broad user base.

Offline Data Cache 750: The Offline Data Cache, while primarily focused on storing data locally for offline access, relies on the RTDM for data synchronization. When the Mobile App is online and connected to the RTDM, it updates the cached data to reflect any changes that occurred in real time. This synchronization ensures that the cached data remains up-to-date and accurate.

FIG. 7 depicts an embodiment of the Mobile App architecture within the broader context of the distribution platform. Its functionalities, encompassing real-time push notifications, image scanning for SKU recognition and other processes, native mobile capabilities, and offline data caching, collectively contribute to an unparalleled distribution experience. This experience not only offers real-time insights but also ensures uninterrupted usability, even in scenarios where internet connectivity is limited or unavailable.

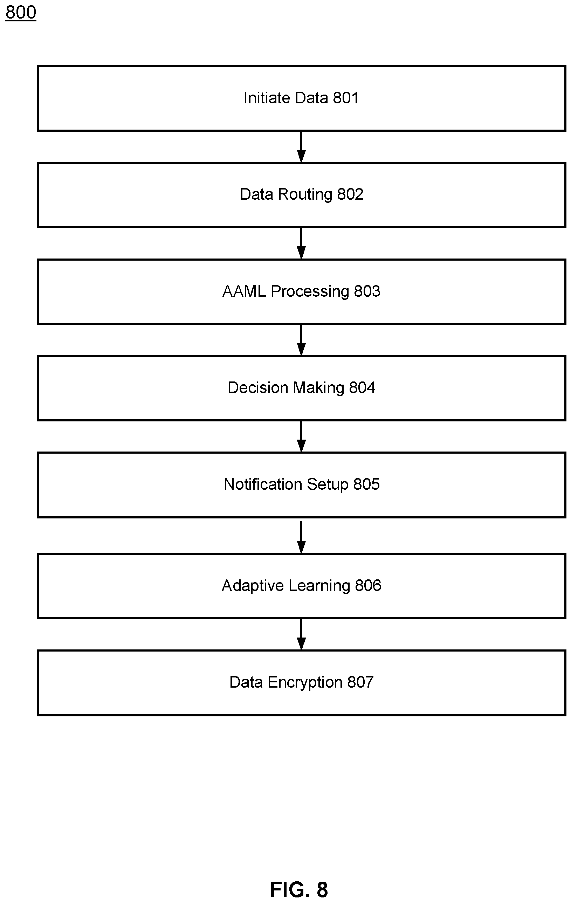

FIG. 8 depicts a process flow 800 for real-time data integration, analysis, and notification in Mobile App system 700, as detailed in FIG. 7. Process flow 800 presents operations performing data assimilation, instantaneous processing, and integration within the RTDM and AAML ecosystems.

At Operation 801, the system initializes the data layer, RTDM, and preprocessing phase. The data layer is designed to store structured and unstructured data, utilizing distributed database strategies like NoSQL. The RTDM continuously draws data from systems like ERP, CRM, and other platforms. It employs a distributed data architecture to synchronize data in real-time. During preprocessing, signal processing methods, including Fourier and wavelet transforms, remove noise. Machine learning techniques such as PCA and t-SNE extract and prioritize data features.

At Operation 802, the data routes to the Advanced Analytics and Machine Learning (AAML) engine. Here, deep learning algorithms, such as BERT or GPT variants, process textual data, extracting semantic associations and patterns.

At Operation 803, decision constructs process outputs from the AAMI, engine. A range of algorithms, from decision trees to Bayesian networks, derive suitable actions based on the analyzed data.

At Operation 804, the Push Notification Service can be activates based on an Event-Driven Architecture (EDA), a Publish-Subscribe (Pub-Sub) system, or another appropriate methodology.

Using the EDA method, the service may respond to distinct data patterns or states deemed as events. These events commonly come from the Real-Time Data Mesh (RTDM), which consistently examines data streams for specific patterns. When RTDM identifies a notable pattern, it registers this as an event, prompting the Push Notification Service. This service can also work with Advanced Analysis and Machine Learning (AAML) techniques, letting it dynamically detect and address changing data patterns.

Additionally or alternatively, using the Pub-Sub system the Push Notification Service uses protocols like MQTT (Message Queuing Telemetry Transport), a lightweight messaging protocol designed for efficient communication between devices in scenarios where bandwidth and resources may be limited. It may be used in mobile applications where real-time, low-overhead messaging is essential. Here, message producers, termed publishers, create messages without naming certain receivers. These messages, arranged into topics, are handled by a broker. Subscribers show interest in certain topics, leading the broker to filter and distribute messages based on these preferences. The MQTT protocol's inherent Quality of Service (QoS) levels ensure varied delivery guarantees. In a pub-sub architecture using MQTT, there are two main roles: the publisher, which sends messages to a central broker, and the subscriber, which receives specific types of messages by subscribing to topics on the broker. MQTT is known for its simplicity and efficiency, offering features like Quality of Service (QoS) levels for message reliability, retained messages, Last Will and Testament (LWT), and security options like TLS/SSL for encrypted communication. Alternatives to MQTT can include (not limited to) AMQP (Advanced Message Queuing Protocol), CoAP (Constrained Application Protocol), WebSockets, and HTTP/HTTPS, to list some alternative protocols with specific features and use cases.

The choice between EDA Pub-Sub, or other methodologies at Operation 804 depends on specific processes, and potential response times. If push notifications invoke earlier operations heavily using RTDM or AAML, the EDA method might be favored. However, if the system requires efficient communication between many separate entities, the Pub-Sub system may be appropriate. The selection can affect subsequent operations and the system's overall performance.

At Operation 805, the Push Notification Service operates in close conjunction with the Advanced Analytics and Machine Learning (AAML) module to enhance the system's real-time communication capabilities. This process involves the utilization of data patterns and derived insights to deliver highly customized notifications to end-users. Here, we delve into the technical details without unnecessary embellishments:

Operation 805 can include delivering pertinent information to users. The Push Notification Service and the AAMI, module integrate to achieve refine insights. The AAML module extracts valuable insights from the extensive dataset maintained by the system. These insights are derived through advanced analytical techniques, predictive modeling, and anomaly detection. Furthermore, the AAML module excels in recognizing and deciphering intricate data patterns, which is paramount for real-time decision-making within the system.

Within the context of Operation 805, the primary focus is on leveraging the insights generated by the AAMI, engine. These insights are used as the foundation for crafting highly tailored notifications that are then dispatched to relevant users. The notifications can serve as critical alerts, providing timely and pertinent information to system users.

For example, when the AAMI, engine identifies a business event of substantial significance, it initiates a notification process. This event could encompass a wide range of scenarios, from sudden market fluctuations to anomalies related to inventory, or the like, detected within the system's data. The AAMI, engine's ability to promptly recognize such events enables sophisticated analysis capabilities.

One key aspect of process flow 800 is the AAML module's insights integrated with the Push Notification Service. This integration ensures that the system can respond in real time to emerging patterns or anomalies, translating data-driven insights into actionable notifications. Moreover, such notifications can be customized to suit the specific context of the event or pattern detected.

The customization of notifications encompasses various parameters, including the type of event, its significance, and the targeted audience. The Push Notification Service is equipped with the capability to categorize and prioritize events, ensuring that critical notifications are delivered promptly to the appropriate recipients. This prioritization is essential to prevent information overload and to ensure that the most urgent matters receive immediate attention.

Underlying this operation is a robust and efficient notification delivery mechanism. The Push Notification Service adheres to standardized protocols, such as Firebase Cloud Messaging (FCM) for Android and Apple Push Notification Service (APNs) for iOS. These protocols are meticulously configured and integrated to meet the specific requirements of the platform, ensuring reliable and secure delivery of notifications.

For Android devices, the integration with Firebase Cloud Messaging (FCM) optimizes the handling of notifications. The Push Notification Service can configure a Cloud Function to act as a trigger for sending notifications, aligning FCM with the event-driven architecture of the system. This approach enhances the efficiency of notification delivery on Android platforms.

Similarly, for iOS devices, the Push Notification Service integrates with the Apple Push Notification Service (APNs). This integration entails a series of specific configuration steps, including the management of cryptographic keys, the setup of an Apple Developer account, and the integration of APNs into the event-driven architecture of the system. These measures establish secure and efficient communication channels with iOS devices.

Operation 805 performs processes for delivering real-time, data-driven insights to its users. It capitalizes on the AAML module's ability to identify patterns, anomalies, and critical business events, translating this information into actionable notifications. These notifications, meticulously customized and prioritized, empower stakeholders with the timely information they need to make informed decisions within the system's dynamic and competitive landscape. The technical precision of this operation, from data analysis to notification delivery, underscores the system's dedication to optimizing communication and facilitating real-time responsiveness.

At Operation 806, the system embeds adaptive feedback mechanisms to optimize its operations. In some embodiments, Operation 806 includes processing and/or training reinforcement learning models like Proximal Policy Optimization, where the system learns from its actions, fine-tuning responses.

At Operation 807, the system secures interaction logs, decisions, and essential metadata through encryption. Methods such as AES (Advanced Encryption Standard) and elliptic-curve cryptography ensure data protection.

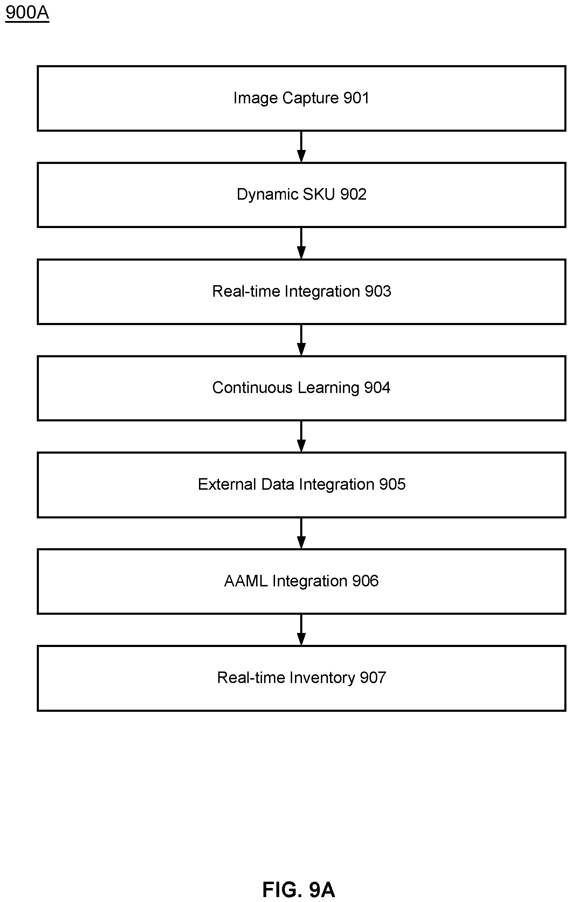

FIG. 9A is a flow diagram of a method 900A for Image Capture and SKU Mapping within a Mobile App system, leveraging advanced AI algorithms, real-time data integration, and dynamic SKU creation. This method streamlines the process of identifying and mapping products to their respective Stock Keeping Units (SKUs), ultimately simplifying the ordering process and reducing manual data entry errors. Method 900A outlines a streamlined and efficient process that leverages the capabilities of the Mobile App based SPoG UI to facilitate image recognition and SKU identification. By integrating real-time data, collaborative decision-making, and role-based access control functionalities, the Mobile SPoG UI enables users to effectively manage and optimize the distribution process. Based on the disclosure herein, operations in method 900A can be performed in a different order and/or vary to suit specific implementation requirements. The process can involve a series or sequence of technical operations designed to maximize efficiency and precision within the Real-Time Data Mesh (RTDM) and Advanced Analytics and Machine Learning (AAML) modules.

At Operation 901, the process begins with Image Capture and Processing. Users employ the Mobile App to capture product images using their mobile device's camera. These images undergo meticulous analysis by advanced AI algorithms. The algorithms scrutinize various visual attributes, including color, shape, texture, labels, and markings on the product. For example, if a user captures an image of a blue cylindrical object with a specific brand label, the algorithm initially identifies the cylindrical shape, proceeds to discern the blue color, and subsequently determines the brand and other pertinent details. This rigorous analysis ensures precise product identification, even when the image quality is suboptimal.

Following the image analysis at Operation 902, the Image Recognition and SKU Mapping Engine engages in Dynamic SKU Creation. Unlike traditional systems reliant on predefined SKUs, this dynamic approach generates unique SKUs for each product, including new variations. This obviates the need for manual data entry, markedly diminishing the likelihood of errors and streamlining the SKU creation process.

At Operation 903, the generated SKU integrates with the system's data layer in real-time. This integration guarantees that SKU information remains current and easily accessible for various operations within the Mobile App. Real-time data synchronization is facilitated by the Real-Time Data Mesh (RTDM) module, which enables data exchange and synchronization, rendering SKU information available for stakeholders to make informed decisions and expedite order processing.

In Operation 904, the Image Recognition and SKU Mapping Engine undergoes Continuous Learning and Adaptation. With each processed product image, the engine's AI algorithms refine their capabilities. This iterative learning process bolsters the engine's accuracy over time, diminishing the likelihood of misidentification. As the system processes more products, it becomes progressively reliable and efficient.

Furthermore, Operation 905 can include Integration with External Data Sources. In certain configurations, the engine collaborates with external data sources to augment product information. These sources may contribute supplementary details such as product specifications, pricing, and supplier information. When a product is identified, the engine retrieves this additional data, enriching the breadth of product details available to users.

The Operation 906 configuration incorporates the Image Recognition and SKU Mapping Engine into the Advanced Analytics and Machine Learning (AAML) module or as a separate system component. This adaptation empowers the engine to manage item identification, order processing, and related tasks using the user's mobile device. Leveraging the mobile device's imaging components and advanced AI algorithms, the engine simplifies operations, reduces errors, and streamlines workflows, ultimately evolving into an indispensable tool for modern enterprises.

Finally, at Operation 907, the integration of the engine with other enterprise systems facilitates Real-time Inventory Updates. Once a product is identified and mapped to its SKU, the system promptly updates the inventory database. This real-time update mechanism ensures accurate stock levels and contributes to efficient order processing within the overarching distribution ecosystem.

Image Capture and SKU Mapping method 900A within the Mobile App system, performs real-time data integration, dynamic SKU creation, continuous learning, and integration with external data sources and enterprise systems. This method augments efficiency and accuracy in product recognition and SKU management, grounded in robust technical capabilities.

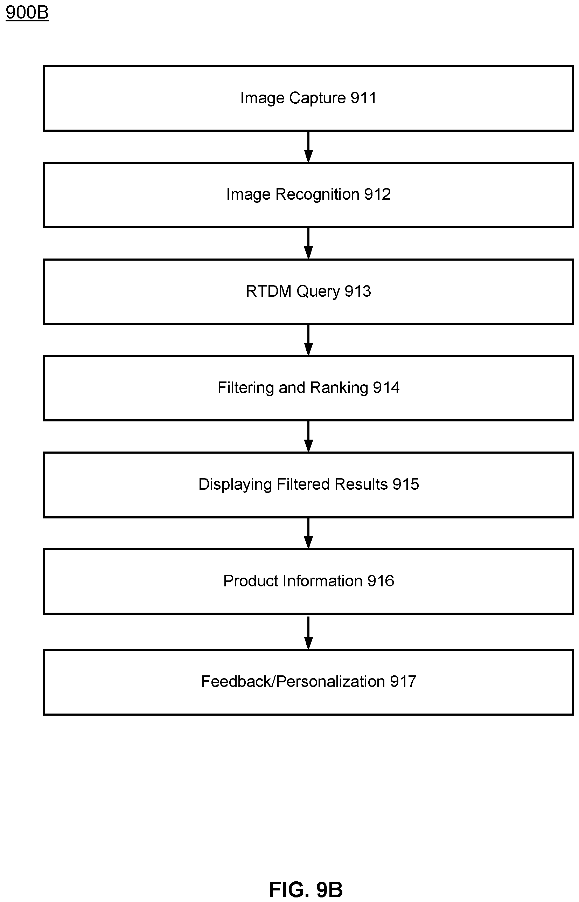

FIG. 9B is a flow diagram of a method 900B for Enhanced Product Lookup Process within the Mobile App system. Method 900B enables users to interact with the system by utilizing advanced search algorithms, RTDM operations, and real-time personalization to enhance product discovery and exploration. With a focus on user-centric design and efficient information retrieval, this process aims to deliver a highly tailored and responsive user experience. This description will guide you through each step of the operation, shedding light on the technical intricacies that enable this enhanced product lookup functionality.

FIG. 9B illustrates a flow diagram of method 900B for Enhanced Product Lookup Process using Image Recognition within the Mobile App system. Method 900B allows users to search for products by capturing images using their mobile device's camera, leveraging sophisticated image recognition algorithms, RTDM operations, and real-time personalization.

The Image Recognition-based Product Lookup in the Mobile App system offers users the ability to quickly obtain product details by snapping photos of items. This feature enhances user satisfaction and fosters efficient decision-making for consumers.

At Operation 911, the process begins with Image Capture and Upload. Users capture a photo of a product using their mobile device's camera. This image is then uploaded to the Mobile App system for processing.

In Operation 912, the Image Recognition Engine, e.g., engine 740, processes the image uploaded. Engine 740 uses advanced AI algorithms to analyze the image's features and attributes, such as color, shape, texture, and any labels or markings. Based on this analysis, the engine matches the product to its respective Stock Keeping Units (SKUs) by comparing the image against a comprehensive database of product images housed in the RTDM. The RTDM, embodied in data layer 710, facilitates real-time data exchange and synchronization, ensuring current and precise information.

Operation 912 involves the Image Recognition Engine acting upon an uploaded image. Engine 740, with artificial intelligence capabilities, examines the details present within the image. The functionality of engine 740 includes using AI algorithms to identify various features and attributes of the image. These include elements such as color patterns, shape outlines, texture properties, and any labels or markings on the product in the image. After deciphering the image's characteristics, engine 740 identifies the product. It matches the analyzed attributes of the product to its corresponding Stock Keeping Units or SKUs. The process involves comparing the uploaded image against a database of product images. This product image database is maintained in the RTDM, i.e., via data layer 710. The RTDM system facilitates data exchange and synchronization, ensuring current and accurate information.

The RTDM ensures that data exchange occurs in real-time. It also oversees the synchronization of data, guaranteeing that the information in the system is current and accurate. When a user uploads an image of a product with recently updated details in the product database, the RTDM ensures that engine 740 accesses the current information during the recognition process. This minimizes potential mismatches.

During Operation 913, a query can be performed via the RTDM. The identified product details from the image recognition process act as parameters for querying the RTDM. The RTDM, integrated with the data layer 710, has purposive datastores, optimized for specific data types like product data, which includes SKU details, descriptions, and inventory levels. The search retrieves items in the RTDM that match or resemble the image's recognized product. The RTDM module also incorporates data from a System of Records layer, including data from various enterprise systems like ERPs. The product details, previously identified from the image recognition procedure, serve as input criteria for this search within the RTDM.

The RTDM embodied via data layer 710, contains specialized datastores. These datastores are designed specifically for distinct types of data. For instance, there's a datastore that primarily caters to product-related information. Within this datastore, details such as SKU identifiers, product descriptions, and available inventory levels reside.

Once the query begins, the RTDM fetches entries that either match or closely resemble the product details identified from the image. It is essential to note that the accuracy of the results depends on the specificity of the recognized product features.

Furthermore, the RTDM is not limited to its own internal database. It also interfaces with the System of Records layer. This layer aggregates data from a variety of enterprise systems. Notable among these systems are Enterprise Resource Planning or ERP systems. By accessing data from these systems, the RTDM ensures comprehensive and enriched product details, enhancing the accuracy of the recognition and match process.

In Operation 914, the retrieved results undergo a Filtering and Ranking process. Filtering criteria might include price, brand, or category. Ranking organizes products using an algorithm that considers user preferences and previous searches. The interaction between the data layer/RTDM module enables the retrieval of ranked and filtered product listings that align with the most up-to-date information available.

At Operation 915, the Mobile App displays the Filtered Results to the user. The interface showcases the identified products with essential details such as names, images, prices, and descriptions.

At Operation 916, users can access In-depth Product Information. After selecting a product from the displayed results, the app provides further details, including specifications, reviews, related items, and availability.

At Operation 917, User Feedback and Personalization processing is performed. The Mobile App gathers user feedback regarding the accuracy and relevance of the identified products. This data aids in refining the image recognition algorithms. Additionally, the system employs machine learning to tailor future product suggestions based on user feedback and search history.

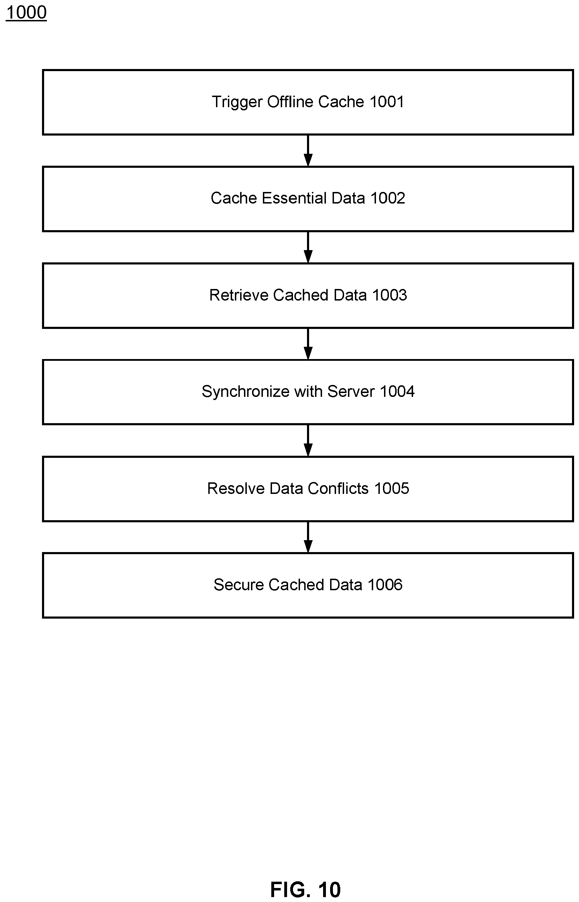

FIG. 10 illustrates a method 1000 for managing an offline data cache in a Mobile App, such as the Offline Data Cache 750 of the Mobile App architecture. As noted above, the Offline Data Cache 750 is designed to optimize performance and ensure uninterrupted access to critical data in scenarios with limited or no internet connectivity. This description provides a process flow for performing functions related to the Offline Data Cache

At Operation 1001, when the Mobile App detects limited or no internet connectivity, the Offline Data Cache 750 is triggered to ensure continuous access to critical data.

Operation 1002 involves the caching of essential data types, including order status, product details, and user preferences, on the user's device. This caching process utilizes local storage mechanisms, such as on-device databases, to store data efficiently. Operation 1002 can include systematic caching of critical data categories, such as order statuses, product details, and user preferences, onto the local storage of the user's device. It leverages efficient data storage mechanisms, such as SQLite databases, to effectively manage and store data locally.

When the user accesses specific data, at Operation 1003, the system retrieves the required information from the locally cached Offline Data Cache. This process involves querying the on-device database and retrieving data without making real-time server requests, which enhances app responsiveness and reduces latency. During this phase, the Mobile App performs data retrieval by accessing specific information from the locally cached Offline Data Cache. Structured SQL queries are employed for precise and rapid data retrieval directly from the on-device database. This approach eliminates the need for real-time server requests, thereby optimizing app responsiveness and reducing latency.

Operation 1004 encompasses a synchronization mechanism. When the device regains internet connectivity, the Offline Data Cache initiates synchronization with backend servers to update locally stored data. This synchronization process involves data differencing algorithms to identify changes made offline and transmit these changes to the server. Data synchronization also involves conflict detection mechanisms to handle cases where multiple changes occur concurrently, ensuring data consistency. This operation is initiated when the device reestablishes internet connectivity. The Offline Data Cache coordinates with backend servers to synchronize and update the locally cached data. It employs advanced data differencing algorithms, such as Delta encoding or binary diffing, to identify and transmit only the relevant data changes to the server. This streamlined synchronization process minimizes data transfer overhead.

In cases of data conflicts, Operation 1005 employs conflict resolution protocols. These protocols utilize timestamp-based or version-based strategies to determine the most recent or prioritized change, ensuring data integrity across platforms. Conflict resolution may involve merging conflicting changes or prompting user intervention in certain cases. In the event of concurrent data alterations, this operation effectively manages data conflicts. It utilizes precise conflict resolution protocols, which rely on timestamps or versioning mechanisms to ascertain the most recent or prioritized data changes. Algorithms like Last-Write-Wins or Three-Way Merge may be applied to ensure data consistency between the device and backend.

Operation 1006 highlights the security measures implemented within the Offline Data Cache. It can be configured to encrypt cached data using industry-standard encryption algorithms such as AES (Advanced Encryption Standard). This encryption safeguards offline data from unauthorized access and potential risks related to compromised devices. Access to encrypted data is controlled using secure key management practices. Operation 1006 can include securing locally cached data. Robust encryption algorithms, such as AES-256, are employed to encrypt the cached data. A comprehensive key management approach, encompassing key generation, secure storage, and access control, is implemented to safeguard offline data from unauthorized access. Encryption and decryption processes are optimized to utilize hardware acceleration for enhanced performance.

Thereby, Method 1000 includes a series of operations to provide uninterrupted access to essential data in offline scenarios. These operations include efficient data caching, data retrieval from local storage, sophisticated data synchronization, conflict resolution mechanisms, and robust data encryption to enhance app functionality and ensure data security in challenging connectivity situations.

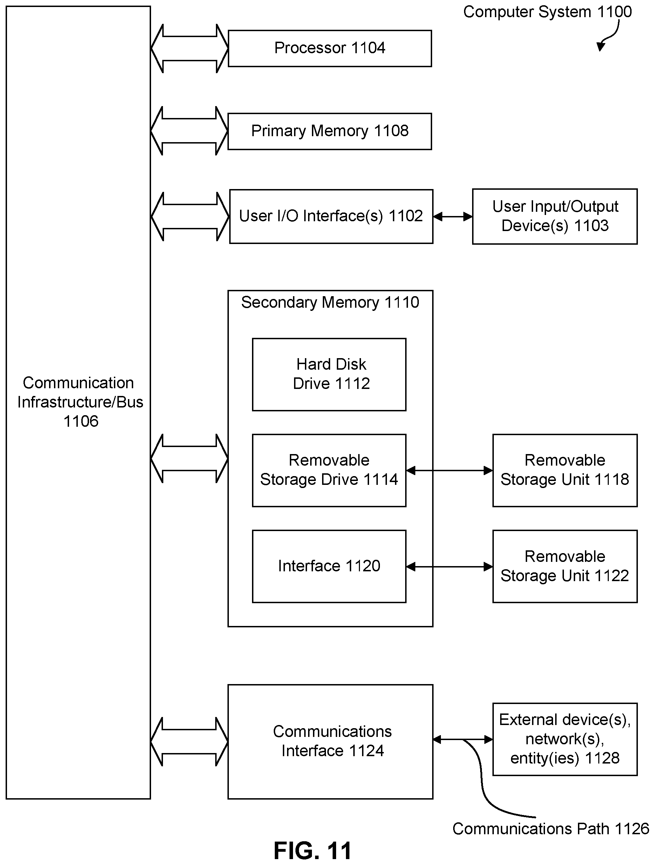

FIG. 11 is a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

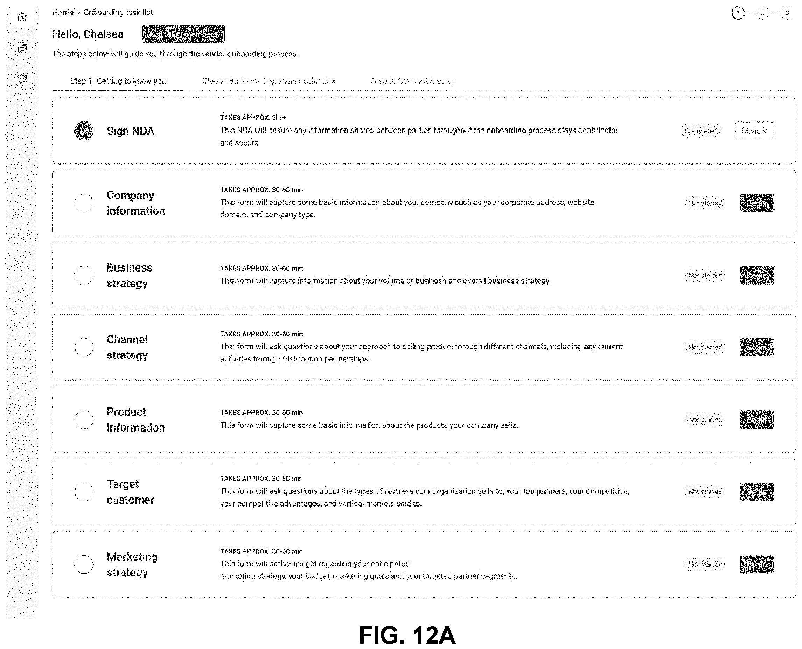

FIGS. 12A to 12Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:

FIG. 12A depicts a Vendor Onboarding Initiation screen that represents the initial step of the vendor onboarding process. It provides a form or interface where vendors can express their interest in joining the supply chain ecosystem. Vendors can enter their basic information, such as company details, contact information, and product catalogs.

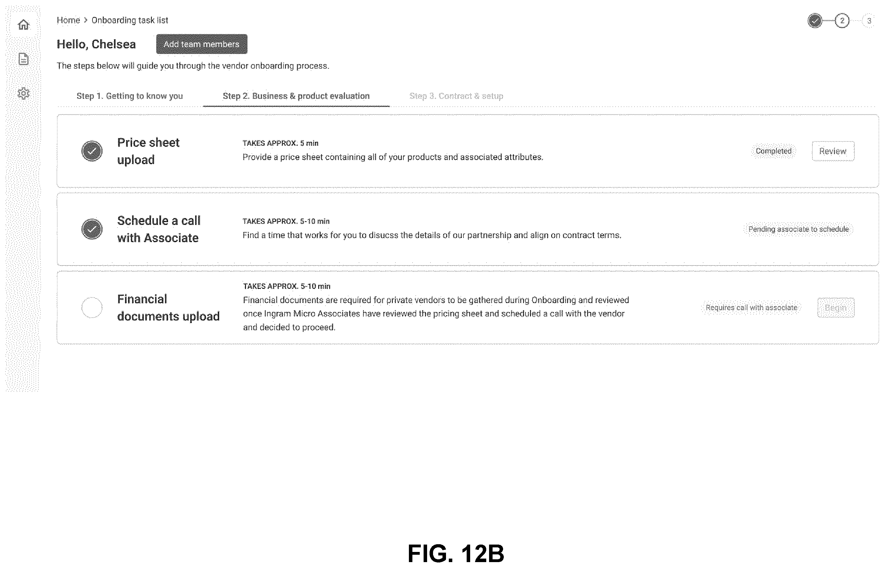

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

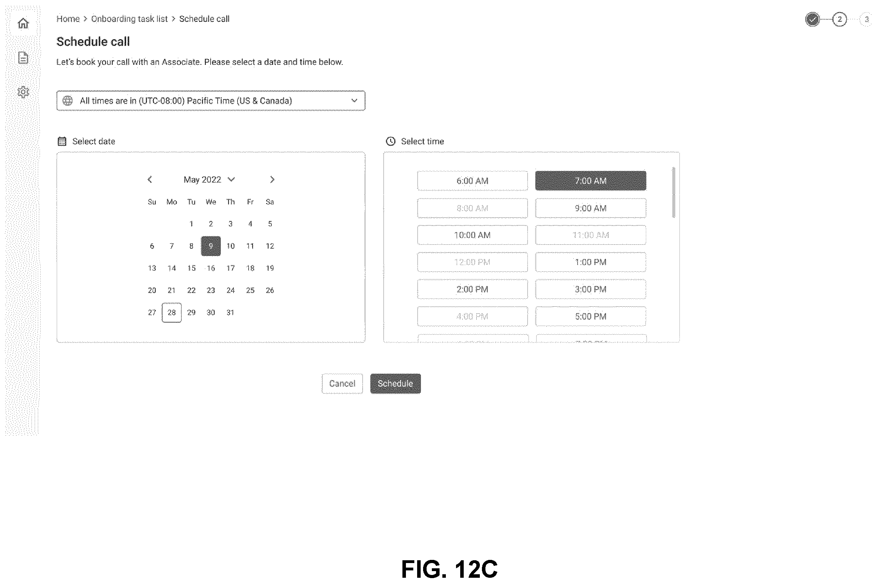

FIG. 12C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

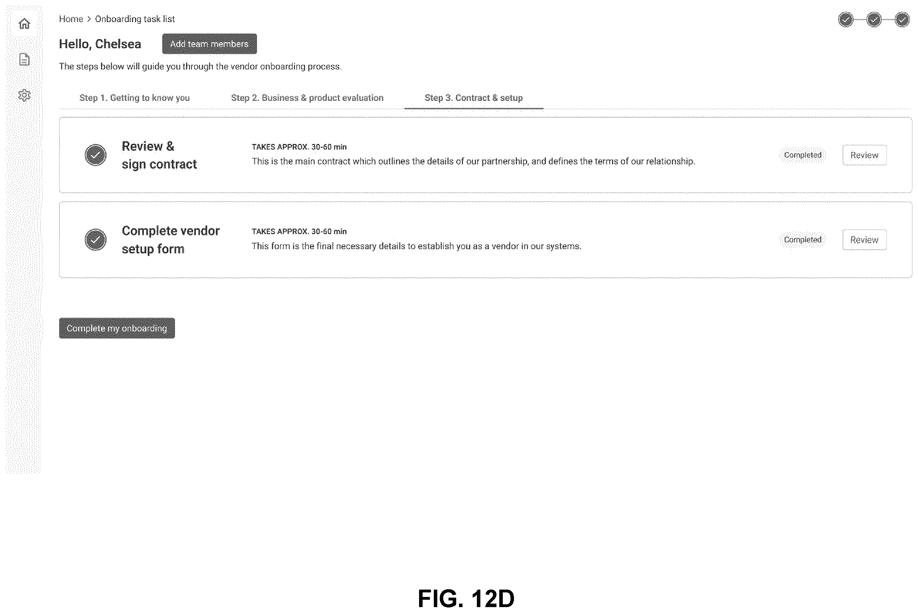

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

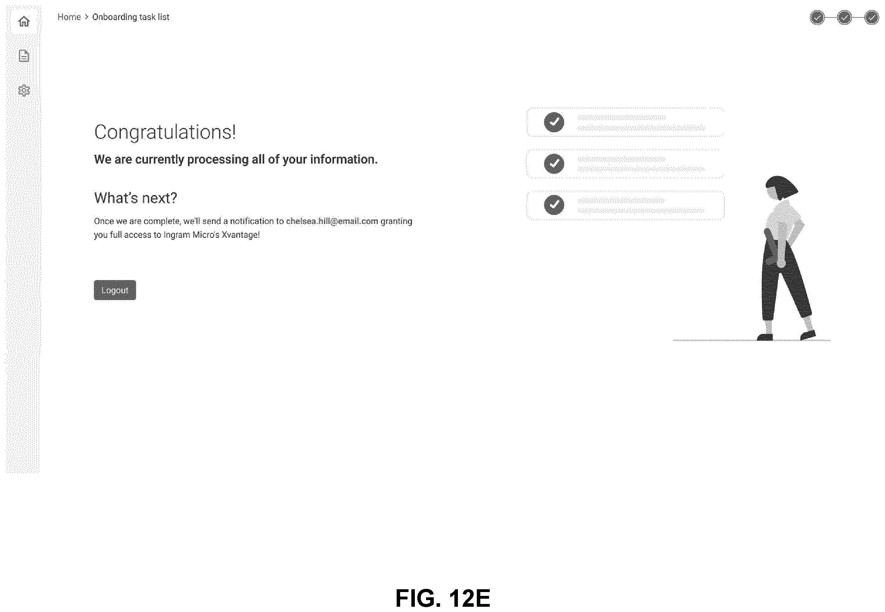

FIG. 12E depicts a Vendor Onboarding Completion Screen that confirms the successful completion of the vendor onboarding process. It may display a congratulatory message or summary of the completed tasks, indicating that the vendor is now officially onboarded into the supply chain ecosystem.

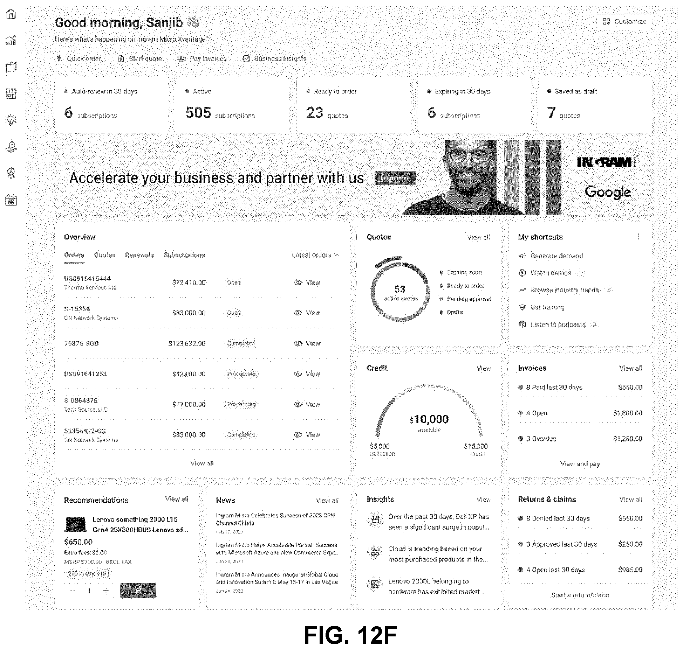

FIG. 12F depicts a Partner Dashboard that offers partners or stakeholders a centralized view of relevant information and metrics related to their partnership with the supply chain ecosystem. It provides an overview of performance indicators, key data points, and actionable insights to facilitate effective collaboration and decision-making.

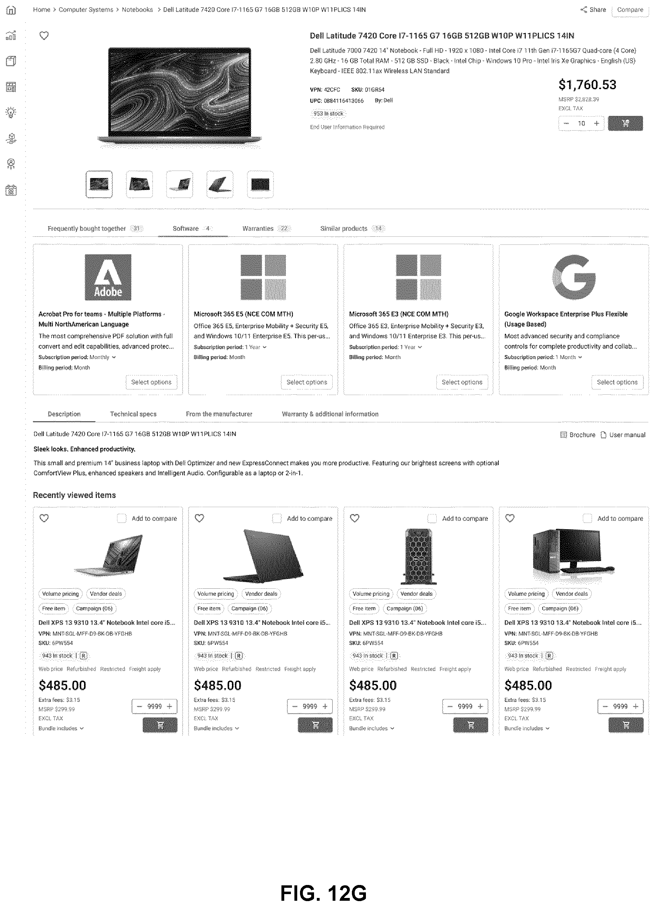

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

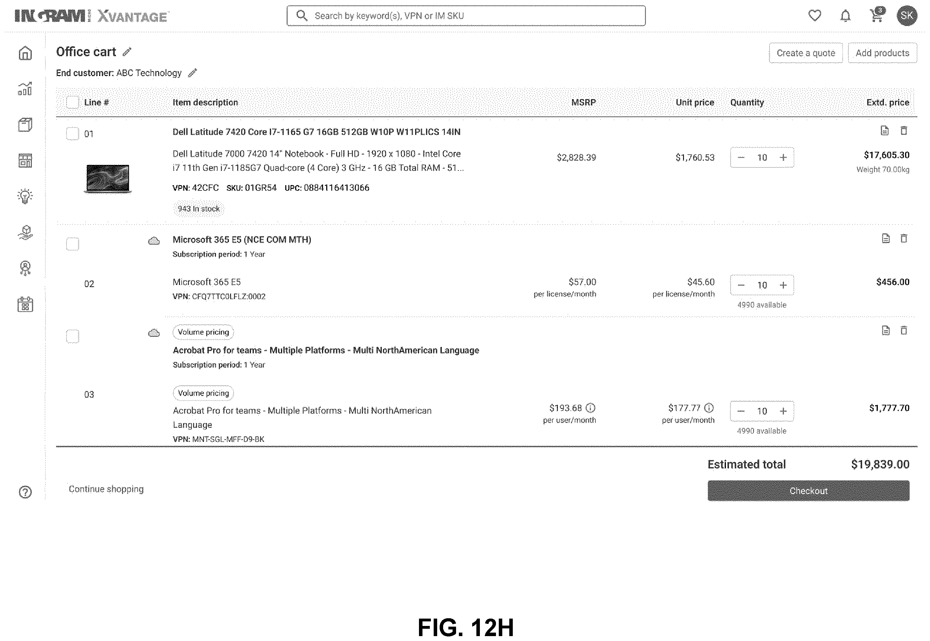

FIG. 12H depicts a Customer Subscription Cart that allows customers to manage their subscription-based purchases. It displays the selected subscription plans, pricing, and duration. Customers can review and modify their subscription details before finalizing their choices.

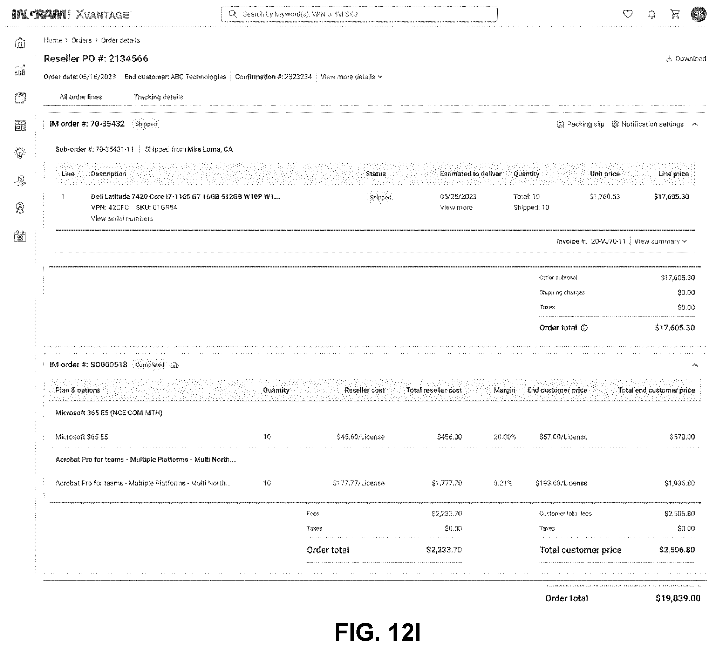

FIG. 12I depicts a Customer Order Summary that provides a summary of the customer's order, including details such as the products or subscriptions purchased, quantities, pricing, and any applied discounts or promotions. It allows customers to review their order before confirming the purchase.

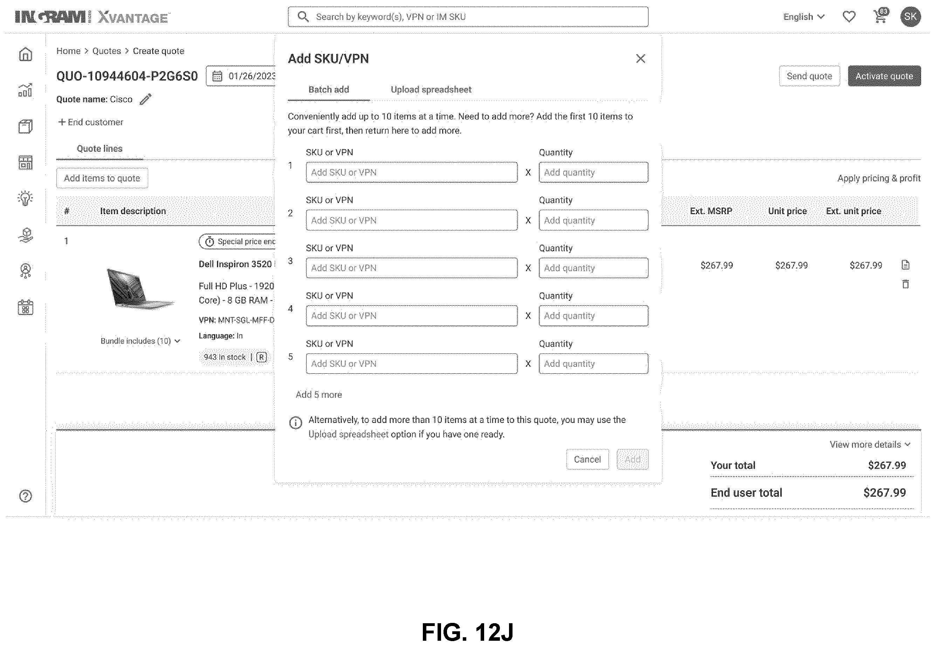

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

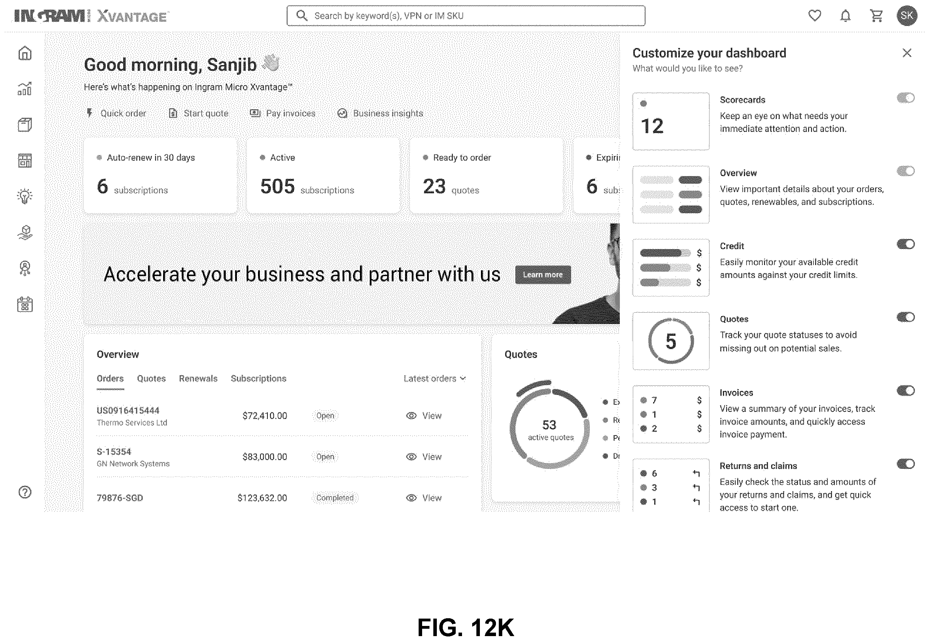

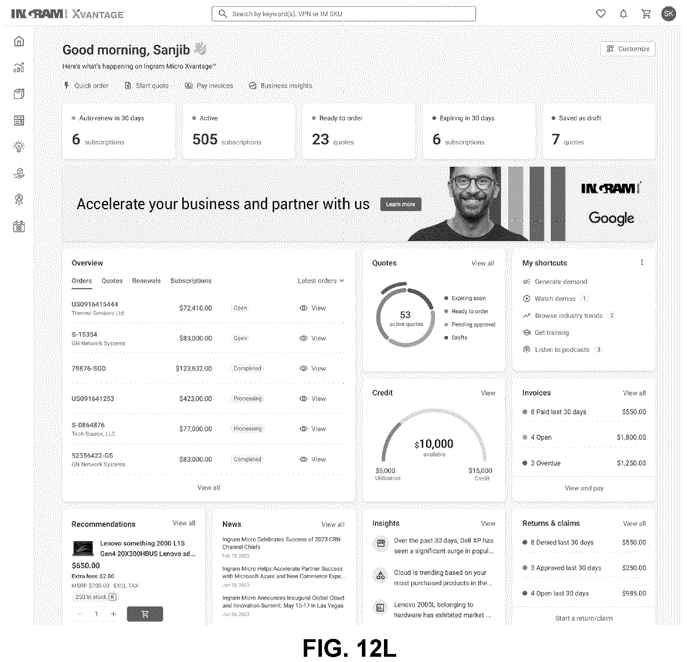

FIGS. 12K and 12L depicts Dashboard Order Summary to display summarized information about orders placed within the supply chain ecosystem. They present key order details, such as order number, customer name, product or subscription information, quantity, and order status. The dashboard provides an overview of order activity, enabling stakeholders to track and manage orders efficiently.

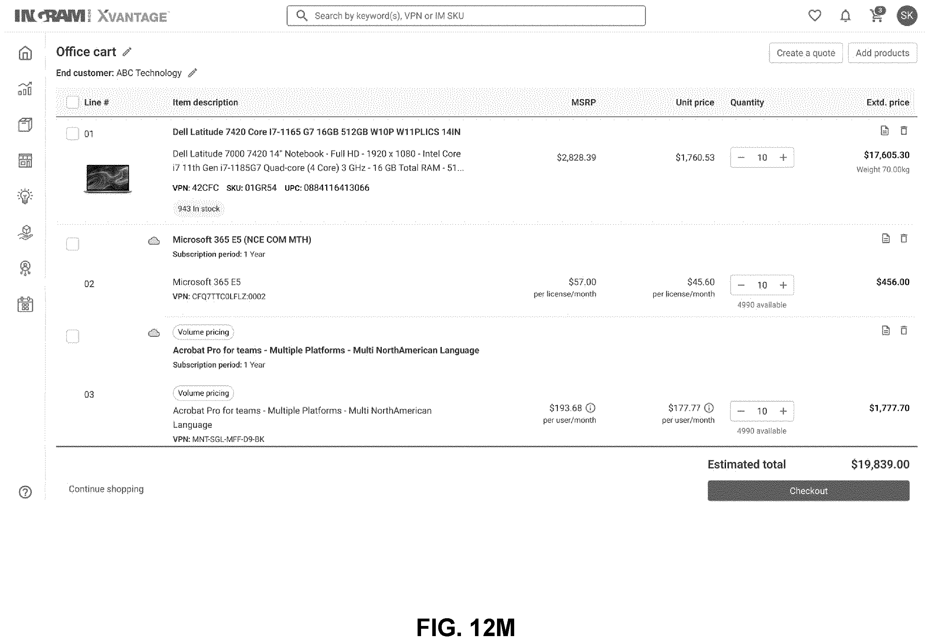

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

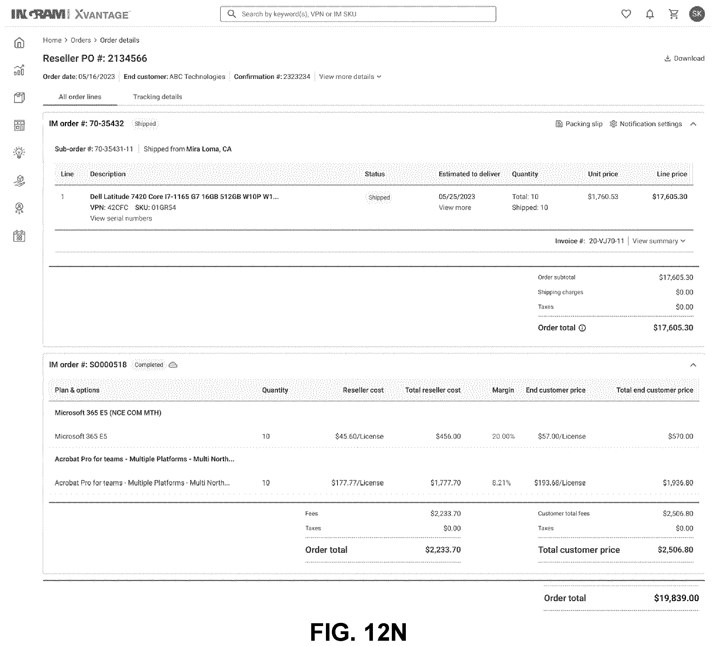

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

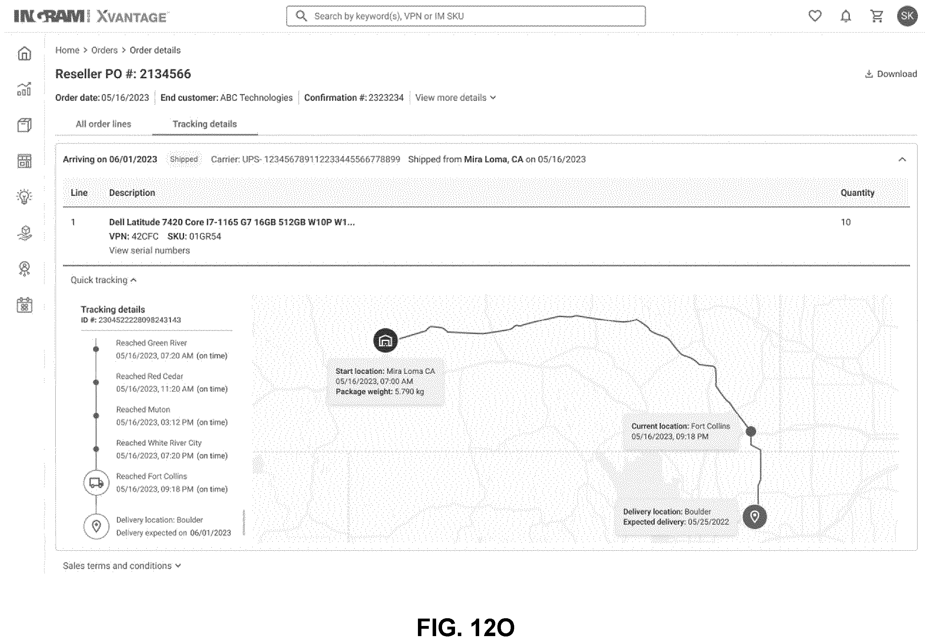

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

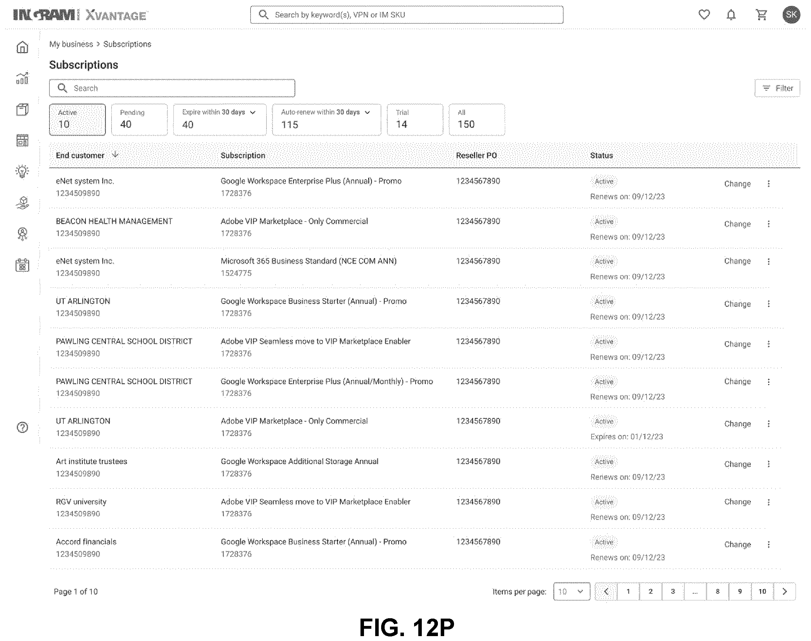

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

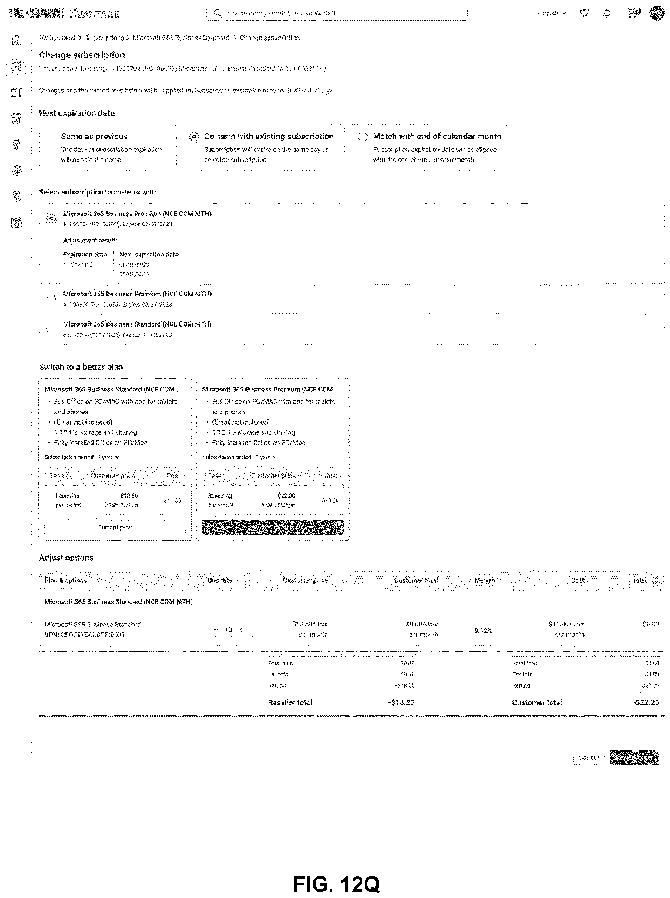

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

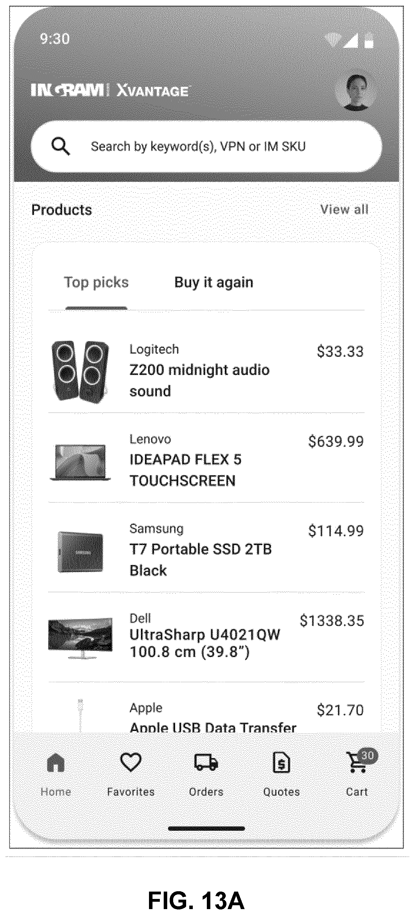

FIGS. 13A to 13F depict various screens and functionalities of a Mobile App based SPoG UI related to vendor onboarding, partner dashboard, customer carts, order summary, SKU generation, order tracking, shipment tracking, subscription history, and subscription modifications. A detailed description of each figure is provided below:

FIG. 13A presents the Home Screen, thoughtfully curated utilizing the described RTDM and AAML architectures to display top product picks tailored to the customer's preferences and browsing history. This interface serves as the gateway to an optimized shopping experience, presenting a selection of products specifically chosen to align with the customer's interests. Leveraging advanced recommendation algorithms, the system identifies products that are highly likely to resonate with the customer. These top picks encompass a diverse range of categories, from electronics and gadgets to clothing and accessories. Each product can be accompanied by a brief description, high-quality images, and pricing details, enabling the customer to explore and make informed choices effortlessly. The Home Screen's intuitive layout ensures that the customer can browse through the showcased products, initiating a personalized shopping journey. With a user-centric design and responsive interface, this screen caters to various devices and screen sizes, ensuring consistent accessibility and user satisfaction.

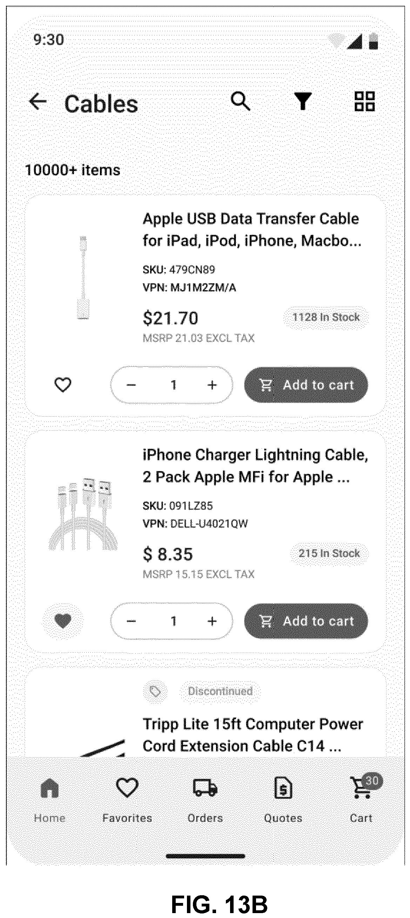

FIG. 13B depicts a Customer Search Results (e.g., "Cables") screen within the Mobile App's interface, designed to deliver an efficient and precise search experience for users seeking specific cable products, for example. Users can initiate searches using keywords, product codes, or specifications related to cables, and the system responds with a clear and organized list of relevant search results. Each search result entry provides essential details, including product names, images, specifications, and pricing information. The interface is meticulously designed for quick and effortless navigation, allowing users to quickly identify the cable products that meet their requirements. Whether users are searching for HDMI cables, Ethernet cables, or any other type of cables, this screen streamlines the search process, ensuring that users can find the right cables with ease. The responsive design of the interface ensures an efficient experience across various devices and screen sizes, promoting user satisfaction and facilitating efficient product discovery.

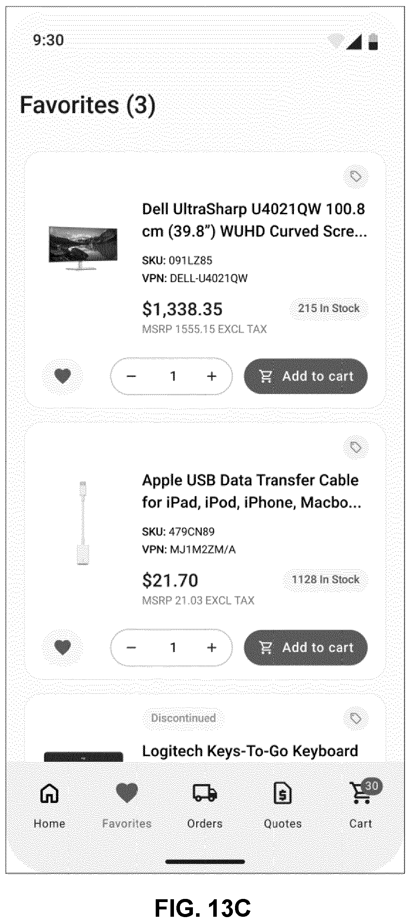

FIG. 13C depicts a Customer Favorites Screen, designed to provide the customer with quick access to their preferred and saved items. This screen enables the user to conveniently store and revisit products of interest. The Favorites Screen offers a comprehensive view of the customer's selected items, from fashion ensembles and tech gadgets to household essentials and more. Each product is accompanied by detailed information, including descriptions, images, and pricing, enabling the customer to recall their choices effortlessly. The intuitive interface allows for seamless navigation and management of the favorite items, including options to add or remove products as preferences evolve. The Favorites Screen enhances the shopping experience by offering a curated collection of the customer's most-wanted items, streamlining the purchasing process and ensuring a personalized approach to shopping. With a user-friendly design and responsive layout, this screen caters to various devices and screen sizes, delivering a consistent and enjoyable user experience.

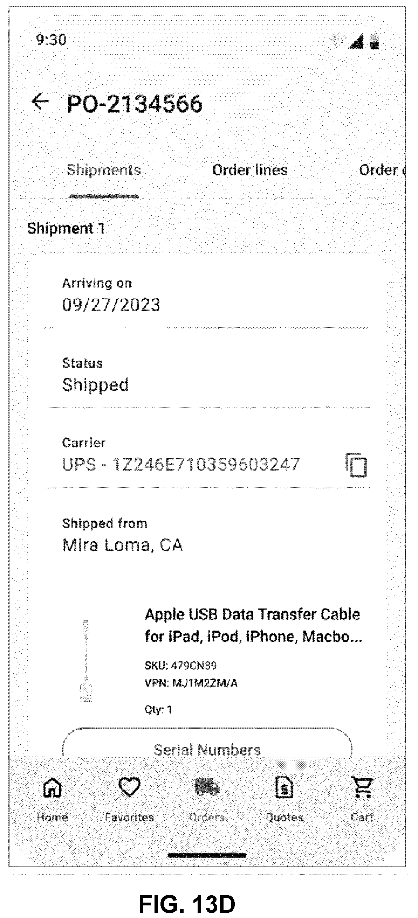

FIG. 13D depicts a Customer Order Tracking screen in a Mobile App that enables customers to track the status and progress of their orders within the supply chain. It displays real-time updates on order fulfillment, including processing, packaging, and shipping. Customers can monitor the movement of their orders and anticipate delivery times.

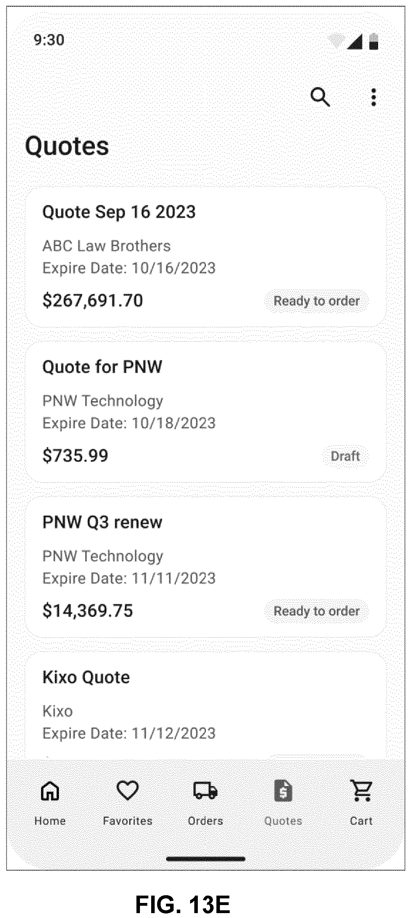

FIG. 13E depicts a Customer Quote List screen within the Mobile App's interface. This screen serves as a comprehensive overview of all quoted orders for the customer. Users can efficiently navigate through their list of quotes, with each entry providing a summary of the quoted order, including product descriptions, quantities, pricing breakdowns, and can include estimated delivery timelines. The screen adopts a clean and intuitive design, aligning with the user-centric approach of the Mobile App's UI philosophy. Customers can easily review their list of quotes, promoting informed purchasing decisions. Responsive elements are integrated into the interface, enabling customers to access more details or take actions on specific quotes with a simple tap or gesture.

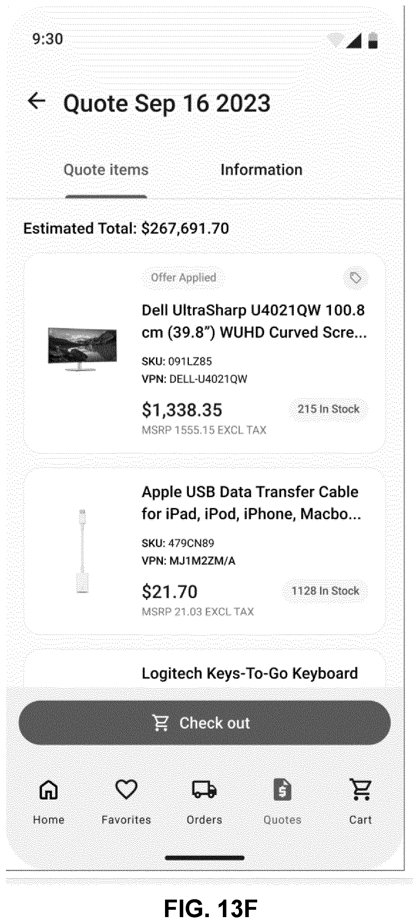

FIG. 13F depicts Customer Quote Details screen, offering users a deeper summary into the specifics of a selected quote. This screen presents a detailed breakdown of the quoted order, including comprehensive product descriptions, precise quantities, itemized pricing, and optional information such as delivery schedules. The interface maintains its user-friendly and responsive design, ensuring that customers can thoroughly review and validate the accuracy of the quoted information. Within the Customer Quote Details screen, customers have the ability to accept, modify, or decline the quoted order with ease, streamlining their engagement with the system. Furthermore, the screen is designed for real-time updates, guaranteeing that any alterations or revisions to the quotation are promptly reflected, fostering transparent and efficient communication between customers and the system.

The depicted UI screens are not limiting. In some embodiments the UI screens of FIGS. 12A to 12Q and 13A to 13F collectively represent the diverse functionalities and features offered by the SPoG UI, providing stakeholders with a comprehensive and user-friendly interface for vendor onboarding, partnership management, customer interaction, order management, subscription management, and tracking within the supply chain ecosystem.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, computer - implemented method may include integrating multiple communication channels (i.e., touchpoints) between the population of users into a unified interactive interface in a computer system, said unified interactive interface herein referred to as a SPoG UI, where the SPoG is a central interface component configured to consolidate user interactions, data, and/or functionalities of the population of users and where the SPoG UI is arranged to facilitate operations across a supply chain ecosystem. Computer - implemented method may also include managing end-to-end lifecycle of the user interactions utilizing the SPoG UI. Method may furthermore include collecting data from said user interactions within the SPoG UI. Method may in addition include analyzing said collected data to generate one or more insights for business growth. Method may moreover include performing one or more artificial intelligence and/or machine learning algorithms to enhance business operations based on the analyzed data. Method may also include incorporating regular updates and improvements into the SPoG UI based on the analyzed data. Method may furthermore include where the population of users may include users selected from two or more diverse groups, the groups having of distributors, resellers, customers, end-customers, vendors, and suppliers. Other embodiments of this aspect include corresponding computer systems, apparatus, and computer programs recorded on one or more computer storage devices, each configured to perform the actions of the methods.

Implementations may include one or more of the following features. Method where the integrating includes establishing communication links with multiple pre-existing business platforms. Method where the consolidated interaction points may include one or more websites, customer relationship management systems, vendor platforms, and supply chain management systems. Method where the managing of end-to-end lifecycle may include one or more of an initial contact, a service fulfillment, and a follow-up interaction. Method where the collecting data may include monitoring and/or logging of user activities within the SPoG UI. Method where the analyzing of collected data is performed using advanced statistical algorithms. Method where the artificial intelligence and machine learning algorithms include predictive analytics to identify market trends. Method where the artificial intelligence and machine learning algorithms include recommendation systems to personalize user interactions. The improvements can be based on analytics and/or the analyzed user feedback received through the SPoG UI. Implementations of the described techniques may include hardware, a method or process, or a computer tangible medium.

In one general aspect, system may include a communication integration module configured to integrate multiple communication channels (i.e., touchpoints). System may also include a consolidation module configured to combine the integrated communication channels into an unified interactive interface, said unified interactive interface herein referred to as a SPoG UI, where the SPoG is a central interface component configured to consolidate user interactions, data, and/or functionalities of the population of users and where the SPoG UI is arranged to facilitate operations across a supply chain ecosystem. System may furthermore include a lifecycle management module configured to manage end-to-end lifecycle of the user interactions within the SPoG. The system may additionally or alternatively include a data collection module configured to automatically collect data from the user interactions within the SPoG. System may moreover include a data analysis module configured to generate one or more insights based on the collected data. System may also include an artificial intelligence module configured to perform one or more AI and/or ML algorithms based on the analyzed data. System may furthermore include where the population of users may include users selected from two or more diverse groups, the groups having distributors, resellers, customers, end-customers, vendors, and suppliers. Other embodiments of this aspect include corresponding computer systems, apparatus, and computer programs recorded on one or more computer storage devices, each configured to perform the actions of the methods.

Systems and methods for automating SKU management can include a user interface configured to receive, from a user, catalog files in two or more diverse formats, a Catalog Transformation module configured to transform the catalog files into a standard format, predicting categorization and attribute mapping for at least one catalog item, wherein the Catalog Transformation module proposes categorization and attribute mapping utilizing iterative learning, a Real-Time Data Mesh (RTDM) module for ensuring real-time data exchange and synchronization across the system components, wherein the RTDM module facilitates real-time interactions between the user and the system, a Master Data Governance (MDG) module for validating the transformed catalogs and communicating any errors back to vendors, a Global Data Repository (GDR) for storing the validated catalogs and maintaining data integrity of the stored catalogs.

The systems and methods can include a Search Platform for indexing and retrieving the stored catalogs. Tthe user interface is a Single Pane of Glass User Interface (SPoG UI). A Dynamic SKU Creation module for generating SKUs in an ERP system for the catalog item, where the catalog item represents one or more non-transactional products, and wherein generating SKUs permits the one or more products to be added to a customer cart. The GDR integrates with the RTDM module to support real-time data synchronization across the system. The MDG module generates an indication to denote one or more errors occurring in a catalog transformation process associated with one or more transformed catalogs. A Global Pricing Engine (GPE) for determining real-time pricing for the catalog item. The GPE determines the price for a product based on one or more of vendor price files, market trends, and historical pricing data. Implementations may include one or more of the following features. Method where the interactive elements include links to various business platforms. Method where the user interaction includes actions may include one or more clicks, hovers, and input data. Method where the collected data is analyzed using advanced statistical algorithms. Method where the personalized content is generated based on recommendation algorithms. Method may include updating the SPoG UI based on user feedback and data analysis results. Implementations of the described techniques may include hardware, a method or process, or a computer tangible medium

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A computerized method for real-time data integration, analysis, and notification in a Mobile App system, comprising:
providing a data layer, and preprocessing phase, wherein the data layer is designed to store structured and unstructured data utilizing distributed database strategies, the RTDM continuously draws data from systems including ERP and CRM, and preprocessing includes signal processing methods to remove noise and machine learning techniques to extract and prioritize data features;
communicating information to an Advanced Analytics and Machine Learning (AAML) engine;
receiving output from the AAML engine using decision constructs;
activating a Push Notification Service based on an Event-Driven Architecture (EDA), a Publish-Subscribe (Pub-Sub) system, or an appropriate methodology, where the EDA method responds to distinct data patterns as events and the Pub-Sub system uses protocols such as MQTT for efficient communication;
operating the Push Notification Service in conjunction with the AAML module to deliver customized notifications to end-users, leveraging insights generated by the AAML engine.

2. The method of claim 1, wherein the preprocessing phase employs signal processing methods, including Fourier and wavelet transforms, to remove noise from the data, ensuring data quality for subsequent analysis within the system.

3. The method according to any of claims 1 or 2, wherein the AAML engine utilizes deep learning algorithms to process textual data, extracting semantic associations and patterns for enhanced analysis.

4. The method according to any of claims 1 to 3, wherein the AAML engine employs one or more algorithms, including decision trees and Bayesian networks, to derive suitable actions based on the analyzed data, enabling data-driven decision-making within the system.

5. The method according to any of claims 1 to 4, wherein the Push Notification Service dynamically detects and addresses changing data patterns using AAML processes to deliver real-time notifications to one or more users.

6. The method according to any of claims 1 to 5, wherein the Push Notification Service delivers customized notifications to end-users based on one or more insights generated by the AAML engine, and categorizes and prioritizes events based on their significance and targeted audience, ensuring efficient communication within the system.

7. The method according to any of claims 1 to 6, further comprising performing an adaptive feedback process to optimize system operations, including processing and training reinforcement learning models like Proximal Policy Optimization to enhance system responsiveness.

8. A mobile application system, comprising:
a user interface (UI) layer configured for intuitive user interaction on a user device for providing a consistent user experience across various devices and platforms,
a data layer of a real-time data mesh operably connected to the one or more headless engines, the data layer comprising a Global Data Lake comprising one or more Purposive Datastores (PDSes), to enable real-time analysis based on real time data within the data mesh, wherein the one or more computers are configured to capture and process the changed data using change data capture mechanisms, and wherein the Global Data Lake is configured to transform and harmonize the captured data into a standardized format that is compatible with analysis and integration processes, ensuring data consistency and compatibility across the data mesh;
a push notification service operating on one or more of an event-driven architecture and a publish-subscribe system to deliver real-time notifications based on distribution platform events;
an image recognition and SKU mapping engine that utilizes advanced AI algorithms to scan and map product images to their respective SKUs, to improve distribution processes;
an offline data cache module for storing critical data locally on a user device, ensuring uninterrupted functionality, and synchronizing with backend servers when connectivity is restored.

9. The mobile application system of claim 8, wherein the UI layer optimizes screen real estate, employs responsive design elements, and facilitates efficient user engagement by prioritizing the user's perspective, including the arrangement of menus, buttons, and navigation bars, ensuring a consistent and user-friendly experience across various devices and platforms.

10. The mobile application system according to any of claims 8 or 9, wherein the data layer includes a Global Data Lake comprising one or more Purposive Datastores (PDSes), enabling real-time analysis based on real-time data within the data mesh. The one or more computers are configured to capture and process the changed data using change data capture mechanisms, and the Global Data Lake is configured to transform and harmonize the captured data into a standardized format compatible with analysis and integration processes, ensuring data consistency and compatibility across the data mesh, including data retrieval from various enterprise systems such as ERPs.

11. The mobile application system according to any of claims 8 to 10, wherein the push notification service operates on an event-driven architecture and utilizes standardized push notification protocols to deliver real-time notifications based on distribution platform events, communicating information to users about distribution platform events.

12. The mobile application system according to any of claims 8 to 11, wherein the image recognition and SKU mapping engine integrates directly with a mobile device's camera, utilizing advanced AI algorithms to analyze product images, including color, shape, texture, and labels, to accurately map them to their respective Stock Keeping Units (SKUs), simplifying distribution processes and reducing manual data entry.

13. The mobile application system according to any of claim 8 to 12, wherein the offline data cache module stores critical data locally on a user device, including order status, product details, and user preferences, ensuring uninterrupted functionality, and synchronizes with backend servers when connectivity is restored, optimizing user experience and maintaining data consistency, including data encryption to safeguard sensitive information both at rest and in transit.

14. The mobile application system according to any of claims 8 to 13, further comprising a security and authentication layer that employs robust encryption mechanisms to safeguard sensitive information both at rest and in transit, enforces authentication protocols to verify user identities, and ensures data integrity and user privacy, including data lineage and audit trail mechanisms.

15. The mobile application system according to any of claims 8 to 14, further comprising a device compatibility module that ensures the mobile application is accessible and functional across a wide range of devices, including smartphones and tablets, irrespective of their operating systems, leveraging the mobile device's imaging components and coupling them to advanced AI algorithms for accurate product recognition, facilitating efficient order processing and inventory management.

16. A computer-readable medium comprising instructions that, when executed by a processor, perform the steps of:
providing a data layer, and preprocessing phase, wherein the data layer is designed to store structured and unstructured data utilizing distributed database strategies, the RTDM continuously draws data from systems including ERP and CRM, and preprocessing includes signal processing methods to remove noise and machine learning techniques to extract and prioritize data features.
communicating information to an Advanced Analytics and Machine Learning (AAML) engine;
receiving output from the AAML engine using decision constructs;
activating a Push Notification Service based on an Event-Driven Architecture (EDA), a Publish-Subscribe (Pub-Sub) system, or an appropriate methodology, where the EDA method responds to distinct data patterns as events and the Pub-Sub system uses protocols such as MQTT for efficient communication; and
operating the Push Notification Service in conjunction with the AAML module to deliver customized notifications to end-users, leveraging insights generated by the AAML engine.

17. The computer-readable medium of claim 16, further comprising instructions for implementing change data capture using one or more trigger-based, machine-learning and/or polling-based CDC algorithms.

18. The computer-readable medium according to any of claims 16 or 17, wherein the data layer comprises Purposive Datastores (PDSes) optimized for efficient retrieval and storage of specific types of data.

19. The computer-readable medium according to any of claims 16 to 18, wherein the AAML engine utilizes deep learning algorithms to process textual data, extracting semantic associations and patterns for enhanced analysis.

20. The computer-readable medium according to any of claims 16 to 19, wherein the Push Notification Service dynamically detects and addresses changing data patterns using AAML processes to deliver real-time notifications to one or more users.

21. A computer-readable medium comprising instructions which, when executed by a computer, cause the computer to carry out the method of any one of claims 1 to 7.

22. The mobile application system according to any one of claims 8 to 15, wherein the mobile application system is configured to perform the method of any one of claims 1 to 7.
